# EUROPEAN PATENT APPLICATION

(11) **EP 4 044 711 A1**
(43) Date of publication of application: **17.08.2022**
(21) Application number: 20875239.4
(22) Date of filing: 22.07.2020
(51) Int. Cl.: H04W 72/02, H04W 72/04

(54) **TERMINAL AND COMMUNICATION METHOD**

(30) Priority: 11.10.2019 JP 2019187624
(71) Applicant: Panasonic Intellectual Property Corporation of America, Torrance, CA 90504 (US)
(72) Inventor: YAMAMOTO, Tetsuya, Osaka-shi, Osaka 540-6207 (JP); SUZUKI, Hidetoshi, Osaka-shi, Osaka 540-6207 (JP); HORIUCHI, Ayako, Osaka-shi, Osaka 540-6207 (JP)
(74) Representative: Grünecker Patent- und Rechtsanwälte PartG mbB
(86) International application number: PCT/JP2020/028440
(87) International publication number: WO 2021/070448

(57) **Abstract**

A terminal according to the present invention is provided with: a reception circuit that receives downlink control information; and a control circuit that, in control for arranging data with respect to a time resource on the basis of the control information, controls a reference for a position at which data is arranged in the time resource, on the basis of a condition related to the data and/or the control information.

## Description

### Technical Field

The present disclosure relates to a terminal and a communication method.

### Background Art

In recent years, a dramatic development of Internet of Things (IoT) has been expected with the expansion and diversification of radio services as a background. The usage of mobile communication is expanding to all fields such as automobiles, houses, home electric appliances, or industrial equipment in addition to information terminals such as smart phones. In order to support the diversification of services, a substantial improvement in the performance and function of mobile communication systems has been required for various requirements such as an increase in the number of connected devices or low latency in addition to an increase in system capacity. Given such a background, the 5th generation mobile communication systems (5G), which have been undergoing research and development and standardization, can flexibly provide radio communication in response to a wide variety of needs by enhanced mobile broadband (eMBB), massive machine type communication (mMTC), and ultra reliable and low latency communication (URLLC).

The 3rd Generation Partnership Project (3GPP) as an international standardizing body has discussed New Radio (NR) as one of 5G radio interfaces and has concluded Release 15 specifications for realizing eMBB and basic URLLC (for example, see Non-Patent Literatures (hereinafter, Non-Patent Literature will be referred to as "NPL") 1 to 4).

For example, the URLLC requirement in Release 15 is to realize a latency of 1 ms or less for a radio interval with a reliability of 99.999 % at the time of transmitting a packet of 32 bytes. In Release 16, on the other hand, in order to extend URLLC to a variety of use cases represented by remote operation or industrial IoT, an extension of the function to realize higher requirements in comparison with Release 15, such as an increased packet size, a further reduced latency, and an improved reliability, has been discussed (see, for example, NPLs 5 and 6).

### Citation List

### Non-Patent Literature

NPL 1
   3GPP TS 38.211 V15.7.0, "NR; Physical channels and modulation (Release 15)," September 2019.
NPL 2
   3GPP TS 38.212 V15.7.0, "NR; Multiplexing and channel coding (Release 15)," September 2019.
NPL 3
   3GPP TS 38.213 V15.7.0, "NR; Physical layer procedure for control (Release 15)," September 2019.
NPL 4
   3GPP TS 38.214 V15.7.0, "NR; Physical layer procedures for data (Release 15)," September 2019.
NPL 5
   RP-191584, "Revised WID: Physical layer enhancements for NR ultra-reliable and low latency communication (URLLC)," Huawei, HiSilicon, June 2019.
NPL 6
   RP-191561, "Revised WID: Support of NR industrial Internet of Things (IoT)," Nokia, Nokia Shanghai Bell, June 2019.
NPL 7
   R1-1908798, "PDCCH enhancements for NR URLLC," Panasonic, August 2019.

### Summary of Invention

### Technical Problem

However, there is room for discussion for a method of assigning a signal in radio communication.

One non-limiting and exemplary embodiment facilitates providing a terminal and a communication method each capable of improving the efficiency of signal assignment in radio communication.

A terminal according to an exemplary embodiment of the present disclosure includes: reception circuitry, which, in operation, receives control information in downlink; and control circuitry, which, in operation, controls, in control of mapping data with respect to a time resource based on the control information, a reference for a position at which the data is mapped in the time resource, based on a certain condition.

It should be noted that general or specific embodiments may be implemented as a system, a method, an integrated circuit, a computer program, a storage medium, or any selective combination thereof.

According to an exemplary embodiment of the present disclosure, the efficiency of frequency usage in radio communication can be improved.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an exemplary architecture for a 3GPP NR system;
FIG. 2 is a schematic diagram illustrating a functional split between NG-RAN and 5GC;
FIG. 3 is a sequence diagram for RRC connection setup/reconfiguration procedures;
FIG. 4 is a schematic diagram illustrating usage scenarios of enhanced mobile broadband (eMBB), massive machine type communications (mMTC), and ultra reliable and low latency communications (URLLC);
FIG. 5 is a block diagram illustrating an exemplary 5G system architecture for non-roaming scenarios;
FIG. 6 illustrates an example of time resource allocation with respect to downlink data;
FIG. 7 illustrates an example of time resource allocation with respect to uplink data;
FIG. 8 illustrates an example of time resource allocation with respect to downlink data;
FIG. 9 illustrates an example of time resource allocation with respect to uplink data;
FIG. 10 illustrates an example of time resource allocation with respect to downlink data;
FIG. 11 illustrates an example of time resource allocation with respect to uplink data;
FIG. 12 illustrates an example of time resource allocation with respect to downlink data to which repetition is applied;
FIG. 13 illustrates an example of time resource allocation with respect to uplink data to which repetition is applied;
FIG. 14 is a block diagram illustrating a configuration example of a part of a terminal;
FIG. 15 is a block diagram illustrating a configuration example of a base station;
FIG. 16 is a block diagram illustrating a configuration example of the terminal;
FIG. 17 is a flowchart illustrating an operation example of the terminal;
FIG. 18 illustrates an example of time resource allocation according to Operation Example 1-1;
FIG. 19 illustrates an example of time resource allocation according to Operation Example 1-2;
FIG. 20 illustrates an example of time resource allocation according to a variation of Embodiment 1;
FIG. 21 illustrates an example of time resource allocation; and
FIG. 22 illustrates an example of time resource allocation according to Embodiment 2.

### Description of Embodiments

Hereinafter, embodiments of the present disclosure will be described in detail with reference to the accompanying drawings.

### <5G NR System Architecture and Protocol Stacks>

3GPP has been working at the next release for the 5th generation cellular technology (also simply referred to as "5G") including the development of a new radio access technology (NR) operating in frequencies ranging up to 100 GHz. The first version of the 5G standard was completed at the end of 2017, which allows proceeding to 5G NR standard-compliant trials and commercial deployments of terminals (for example, smart phones).

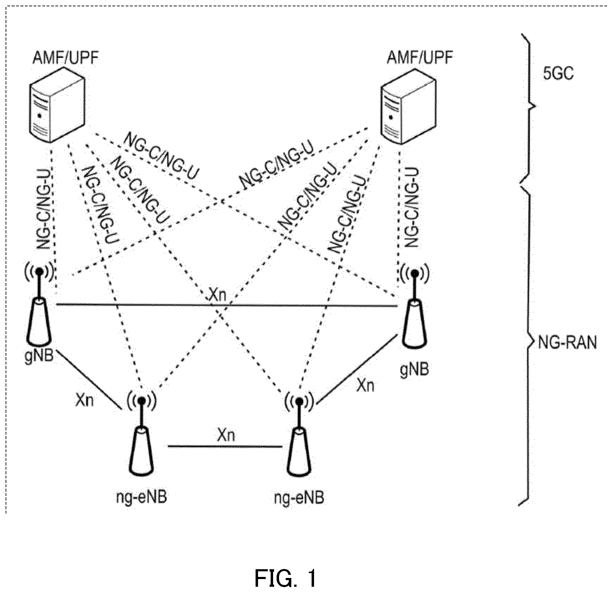

For example, the overall system architecture assumes an NG-RAN (Next Generation - Radio Access Network that includes gNBs. The gNBs provide the NG-radio access user plane (SDAP/PDCP/RLC/MAC/PHY) and control plane (RRC) protocol terminations on the side of the UE. The gNBs are interconnected with each other by means of the Xn interface. Further, the gNBs are connected to the NGC (Next Generation Core by means of the Next Generation (NG) interface), more specifically to the AMF (Access and Mobility Management Function) (for example, a specific core entity performing the AMF) by means of the NG-C interface and to the UPF (User Plane Function) (for example, a specific core entity performing the UPF) by means of the NG-U interface. The NG-RAN architecture is illustrated in FIG. 1 (for example, see 3GPP TS 38.300 v15.6.0, section 4).

The user plane protocol stack for NR (see, for example, 3GPP TS 38.300, section 4 4.1) includes the PDCP (Packet Data Convergence Protocol (see section 6.4 of TS 38.300)), RLC (Radio Link Control (see section 6.3 of TS 38.300)) and MAC (Medium Access Control (see section 6.2 of TS 38.300)) sublayers, which are terminated in the gNB on the network side. Further, a new access stratum (AS) sublayer (Service Data Adaptation Protocol (SDAP)) is introduced above PDCP (see, for example, section 6.5 of 3GPP TS 38.300). Further, a control plane protocol stack is defined for NR (see, for example, TS 38.300, section 4.4.2). An overview of the Layer 2 functions is described in TS 38.300, section 6. The functions of the PDCP, RLC and MAC sublayers are listed in sections 6.4, 6.3, and 6.2 of TS 38.300, respectively. The functions of the RRC layer are listed in TS 38.300, section 7.

For example, the Medium-Access-Control layer handles logical-channel multiplexing, and scheduling and various scheduling-related functions including handling of various numerologies.

For example, the physical layer (PHY) plays roles of coding, PHY HARQ processing, modulation, multi-antenna processing, and mapping of the signal to the appropriate physical time-frequency resources. Further, the physical layer handles mapping of transport channels to physical channels. The physical layer provides services to the MAC layer in the form of transport channels. A physical channel corresponds to the set of time-frequency resources used for transmission of a specific transport channel, and each transport channel is mapped to a corresponding physical channel. For example, the physical channels are PRACH (Physical Random Access Channel), PUSCH (Physical Uplink Shared Channel), and PUCCH (Physical Uplink Control Channel) as uplink physical channels, and PDSCH (Physical Downlink Shared Channel), PDCCH (Physical Downlink Control Channel), and PBCH (Physical Broadcast Channel) as downlink physical channels.

Use cases/deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20 Gbps for downlink and 10 Gbps for uplink) and user-experienced data rates as much as three times data rates provided by IMT-Advanced. In the case of URLLC, on the other hand, the tighter requirements are put on ultra-low latency (0.5 ms for UL and DL each for user plane latency) and high reliability (1-10-5 in 1 ms). Finally, mMTC may preferably require high connection density (1,000,000 apparatuses/km² in an urban environment), large coverage in harsh environments, and extremely long-life battery for low cost apparatuses (15 years).

Accordingly, the OFDM numerology (for example, subcarrier spacing, OFDM symbol length, cyclic prefix (CP) length, and the number of symbols per scheduling interval) that is suitable for one use case may not be valid for other use cases. For example, low-latency services may preferably require a shorter symbol length (and thus larger subcarrier spacing) and/or a fewer number of symbols per scheduling interval (also referred to as TTI) than an mMTC service. Further, deployment scenarios with large channel latency spreads may preferably require a longer CP length than scenarios with short latency spreads. The subcarrier spacing may be optimized according to situations such that the similar CP overhead is retained. NR may support one or more than one value of subcarrier spacing. Correspondingly, subcarrier spacings of 15 kHz, 30 kHz, 60 kHz ... are being considered at the moment. Symbol length Tu and subcarrier spacing Δf are directly related through the equation Δf = 1/Tu. In the same manner as in LTE systems, the term "resource element" can be used to denote a minimum resource unit composed of one subcarrier for the length of one OFDM/SC-FDMA symbol.

In the new radio system 5G-NR, for each numerology and each carrier, a resource grid of subcarriers and OFDM symbols is defined for uplink and downlink, respectively. Each element in the resource grid is referred to as a resource element and is identified based on the frequency index in the frequency domain and the symbol position in the time domain (see 3GPP TS 38.211 v15.6.0).

### <5G NR Functional Split between NG-RAN and 5GC>

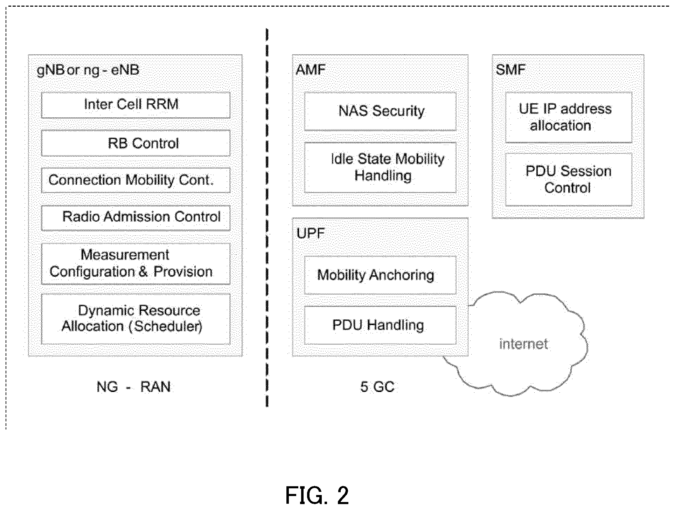

FIG. 2 illustrates a functional split between NG-RAN and 5GC. NG-RAN logical node is a gNB or ng-eNB. The 5GC includes logical nodes AMF, UPF and SMF.

For example, the gNB and ng-eNB host the following main functions:
- Functions for Radio Resource Management such as Radio Bearer Control, Radio Admission Control, Connection Mobility Control, and dynamic allocation (scheduling) of resources to UEs in both uplink and downlink;
- IP header compression, encryption and integrity protection of data;
- Selection of an AMF at UE attachment in a case where no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or operation, admission, maintenance (OAM));
- Measurement and measurement reporting configuration for mobility and scheduling;
- Transport level packet marking in the uplink;
- Session management;
- Support of network slicing;
- QoS flow management and mapping to data radio bearers;
- Support of UEs in RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Non-Access Stratum (NAS) signaling termination function;
- NAS signaling security;
- Access Stratum (AS) security control;
- Inter Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

Further, the User Plane Function (UPF) hosts the following main functions:
- Anchor point for intra-/inter-RAT mobility (when applicable);
- External Protocol Data Unit (PDU) session point of interconnect to data network;
- Packet routing and forwarding;
- Packet inspection and user plane part of Policy rule enforcement;
- Traffic usage reporting;
- Uplink classifier to support routing traffic flows to a data network;
- Branching point to support multi-homed PDU session;
- QoS processing for user plane (for example, packet filtering, gating, and UL/DL rate enforcement);
- Uplink traffic verification (SDF to QoS flow mapping); and
- Downlink packet buffering and downlink data indication triggering function.

Finally, the Session Management Function (SMF) hosts the following main functions:
- Session management;
- UE IP address allocation and management;
- Selection and control of UPF;
- Function for configuring traffic steering at User Plane Function (UPF) to route traffic to proper destination;
- Control part of policy enforcement and QoS; and
- Downlink data indication.

### <RRC Connection Setup and Reconfiguration Procedures>

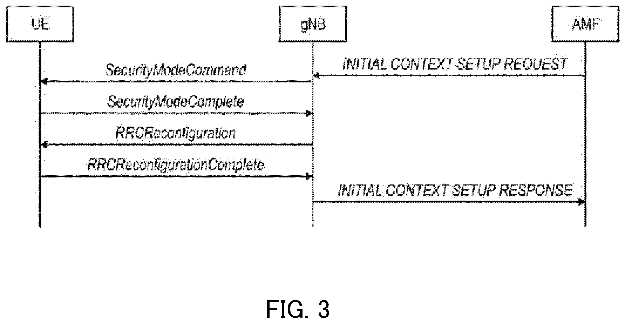

FIG. 3 illustrates some interactions between a UE, gNB, and AMF (a 5GC entity) when the UE transits from RRC_IDLE to RRC_CONNECTED for the NAS part (see TS 38.300 v15.6.0).

RRC is a higher-layer signalling (protocol) used for UE and gNB configuration. With this transition, the AMF prepares the UE context data (including, for example, PDU session context, the security key, UE Radio Capability and UE Security Capabilities, or the like) and sends the UE context data to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Thereafter, the gNB performs the reconfiguration to set up the Signaling Radio Bearer 2 (SRB2) and Data Radio Bearer(s) (DRB(s)) by transmitting an RRCReconfiguration message to the UE and, in response, by the gNB receiving the RRCReconfigurationComplete from the UE. For a signaling-only connection, the steps relating to the RRCReconfiguration are omitted since SRB2 and DRBs are not set up. Finally, the gNB indicates the AMF that the setup procedure is completed with the INITIAL CONTEXT SETUP RESPONSE.

Thus, in the present disclosure, an entity (for example, AMF, SMF, or the like) of a 5th Generation Core (5GC) is provided that includes control circuitry which, in operation, establishes a Next Generation (NG) connection with a gNodeB, and a transmitter which, in operation, transmits an initial context setup message to the gNodeB via the NG connection so as to cause a signaling radio bearer to be set up between the gNodeB and a user equipment (UE). Specifically, the gNodeB transmits a Radio Resource Control (RRC) signaling including a resource allocation configuration information element (IE) to the UE via the signaling radio bearer. The UE then performs an uplink transmission or a downlink reception based on the resource allocation configuration.

### <Usage Scenarios of IMT for 2020 and beyond>

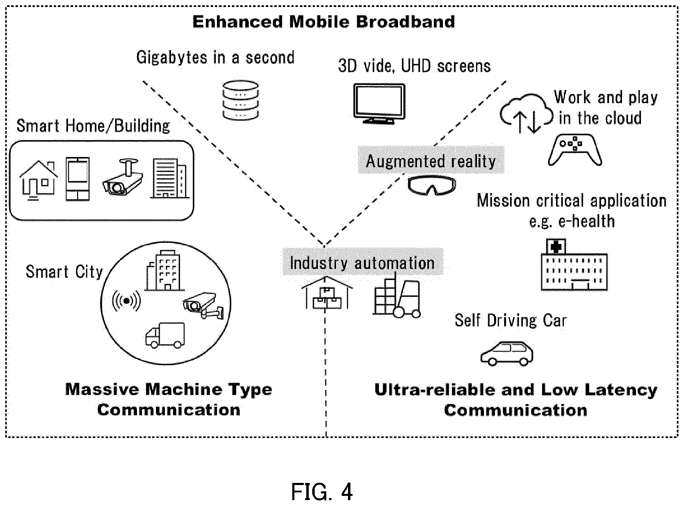

FIG. 4 illustrates some of the use cases for 5G NR In 3rd generation partnership project new radio (3GPP NR), three use cases are being discussed that have been envisaged to support a wide variety of services and applications by IMT-2020. The specification for the first stage for enhanced mobile-broadband (eMBB) has been concluded. In addition to further extending the eMBB support, the current and future work includes the standardization for ultra-reliable and low-latency communications (URLLC) and massive machine-type communications (mMTC). FIG. 4 illustrates some examples of envisioned usage scenarios for IMT for 2020 and beyond (see, for example, ITU-R M.2083 FIG. 2).

The URLLC use case has stringent requirements for capabilities such as throughput, latency, and availability. The URLLC use case has been envisioned as one of element technologies for realizing future applications such as wireless control of industrial manufacturing or production processes, remote medical surgery, distribution automation in a smart grid, and transportation safety. Ultra-reliability for URLLC is to be supported by identifying the techniques to meet the requirements configured by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes in the case of a user plane latency of 1 ms.

From the viewpoint of the physical layer, reliability can be improved by a number of possible ways. The current room for improving the reliability includes defining separate CQI tables for URLLC, more compact DCI formats, repetition of PDCCH, or the like. However, this room may widen for realizing ultra-reliability as the NR becomes more stable and developed (for NR URLLC key requirements). Specific use cases of NR URLLC in Release 15 include augmented reality/virtual reality (AR/VR), e-health, e-safety, and mission-critical applications.

Further, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. The pre-emption means that a transmission for which resources have already been allocated is stopped, and the already allocated resources are used for another transmission that has been requested later, but has lower latency/higher priority requirements. Accordingly, the already granted transmission is replaced with a later transmission. The pre-emption is applicable independent of the specific service type. For example, a transmission for a service type A (URLLC) may be replaced with a transmission for a service type B (such as eMBB). Technology enhancements with respect to reliability improvement include dedicated CQI/MCS tables for the target BLER of 1E-5.

The use case of mMTC (massive machine type communications) is characterized by a very large number of connected apparatuses typically transmitting a relatively low volume of non-latency sensitive data. The apparatuses are required to be inexpensive and to have a very long battery life. From the viewpoint of NR, utilizing very narrow bandwidth parts is one possible solution to have power saving from the viewpoint of the UE and enable long battery life.

As described above, it is expected that the scope of reliability improvement in NR becomes wider. One key requirement to all the cases and, for URLLC and mMTC, for example, is high reliability or ultra-reliability. Several mechanisms can improve the reliability from the viewpoint of radio and the viewpoint of network. In general, there are a few key potential areas that can help improve the reliability. These areas include compact control channel information, data/control channel repetition, and diversity with respect to the frequency domain, time domain and/or spatial domain. These areas are applicable to reliability improvement in general, regardless of specific communication scenarios.

For NR URLLC, further use cases with tighter requirements such as factory automation, transport industry, and electrical power distribution have been envisioned. The tighter requirements are higher reliability (reliability up to 10-6 level), higher availability, packet sizes of up to 256 bytes, and time synchronization up to the extent of a few µs (where the value can be one or a few µs depending on frequency range and short latency to the extent of 0.5 ms to 1 ms (for example, a target user plane latency of 0.5 ms), depending on the use cases).

Further, for NR URLLC, there may be several technology enhancements from the viewpoint of the physical layer. These technology enhancements include PDCCH (Physical Downlink Control Channel) enhancements related to compact DCI, PDCCH repetition, and increased PDCCH monitoring. Further, UCI (Uplink Control Information) enhancements are related to enhanced HARQ (Hybrid Automatic Repeat Request) and CSI feedback enhancements. Further, there may be PUSCH enhancements related to mini-slot level hopping and retransmission/repetition enhancements. The term "mini slot" refers to a Transmission Time Interval (TTI) including a smaller number of symbols than a slot (a slot including 14 symbols).

### <QoS Control>

The 5G QoS (Quality of Service) model is based on QoS flows and supports both QoS flows that require guaranteed flow bit rate (Guaranteed Bit Rate (GBR) QoS flows) and QoS flows that do not require guaranteed flow bit rate (non-GBR QoS Flows). Thus, at NAS level, the QoS flow is the finest granularity of QoS differentiation in a PDU session. A QoS flow is identified within a PDU session by a QoS flow ID (QFI) carried in an encapsulation header via NG-U interface.

For each UE, 5GC establishes one or more PDU sessions. For each UE, the NG-RAN establishes at least one of Data Radio Bearers (DRB) together with the PDU session, for example, as indicated above with reference to FIG. 3. Further, additional DRB(s) for QoS flow(s) of that PDU session can be subsequently configured (it depends on NG-RAN when the additional DRB(s) is/are configured). The NG-RAN maps packets belonging to various PDU sessions to various DRBs. NAS level packet filters in the UE and in the 5GC associate UL and DL packets with QoS Flows, whereas AS-level mapping rules in the UE and in the NG-RAN associate UL and DL QoS Flows with DRBs.

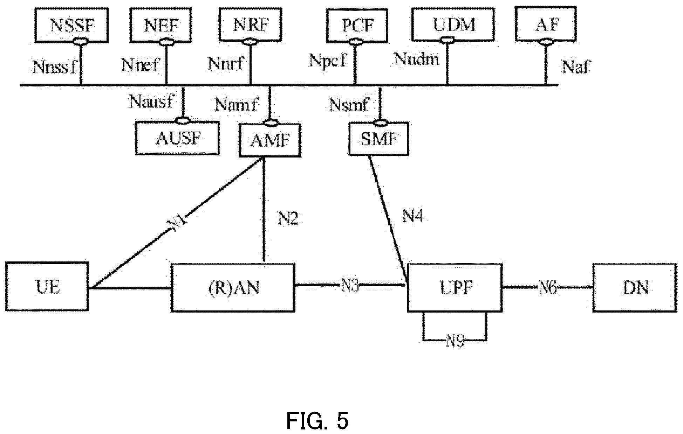

FIG. 5 illustrates a 5G NR non-roaming reference architecture (see TS 23.501 v16.1.0, section 4.23). An Application Function (AF) (for example, an external application server hosting 5G services, exemplified in FIG. 4) interacts with the 3GPP Core Network in order to provide services, for example, to support application influencing on traffic routing, accessing Network Exposure Function (NEF) or interacting with the policy framework for policy control (for example, QoS control) (see Policy Control Function (PCF)). Based on operator deployment, Application Functions considered to be trusted by the operator can interact directly with relevant Network Functions. Application Functions which are not allowed by the operator to directly access the Network Functions use the external exposure framework via the NEF to interact with relevant Network Functions.

FIG. 5 also illustrates further functional units of the 5G architecture, that is, Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, for example, services by the operator, Internet access or services by a third party). All of or a part of the core network functions and the application services may be deployed and running on cloud computing environments.

Accordingly, in the present disclosure, an application server (for example, AF of the 5G architecture) is provided that includes: a transmitter, which, in operation, transmits a request including a QoS requirement for at least one of URLLC, eMMB and mMTC services to at least one of functions (such as NEF, AMF, SMF, PCF, and UPF, for example) of the 5GC in order to establish a PDU session including a radio bearer between a gNodeB and a UE in accordance with the QoS requirement; and control circuitry, which, in operation, performs the services by using the established PDU session.

### [Time Resource Allocation]

In NR, for example, a base station (also referred to as gNB, for example) schedules, for a terminal (also referred to as UE (User Equipment), for example), a downlink data channel (for example, PDSCH (Physical Downlink Shared Channel)) or an uplink data channel (for example, PUSCH (Physical Uplink Shared Channel)) based on downlink control information (for example, DCI (Downlink Control Information)).

DCI is transmitted from a base station to a terminal in a downlink control channel (for example, PDCCH (Physical Downlink Control Channel)), for example. For example, a radio resource (hereinafter referred to as "time resource") in the time domain to be allocated to a data channel is controlled by DCI.

Further, in NR, for example, a time resource may be allocated more flexibly in order to realize low latency. For example, in NR, in addition to allocation (in other words, basic allocation) with 1 slot (for example, 14 symbols per slot) as a unit, allocation with a unit, also referred to as "mini slot", shorter than a slot (for example, one to several symbols) is possible.

For example, a time resource to be allocated to a data channel may be controlled by a time resource allocation (for example, TDRA (Time Domain Resource Assignment)) field of DCI.

For example, a plurality of allocation patterns for allocating a time resource (hereinafter referred to as "allocation pattern(s)") is configured to a terminal by a higher-layer (for example, radio resource control (RRC)) signaling. In DCI (for example, the TDRA field), the base station indicates one allocation pattern of the plurality of allocation patterns configured to the terminal, and allocates the time resource to the terminal (see, for example, NPLs 2 to 4).

Here, an allocation pattern for allocating a time resource to be configured to a terminal may include, for example, parameters such as a slot offset ("Slot offset") indicating a slot position by using as a reference a slot in which the terminal has received DCI, a start symbol position (for example, a start symbol (Start symbol)), at which transmission or reception of data is started, in a slot, and the number of symbols (for example, "symbol length (Length)").

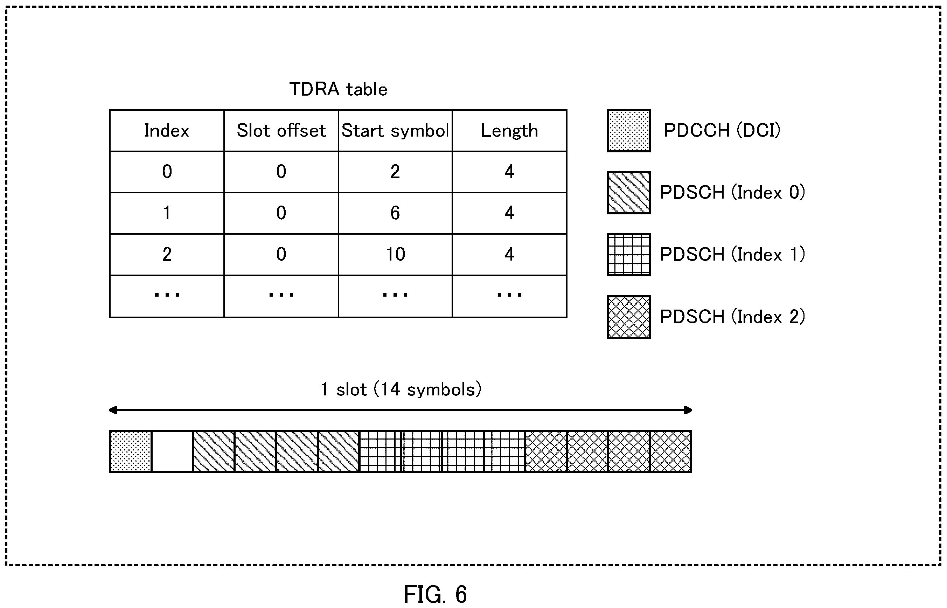

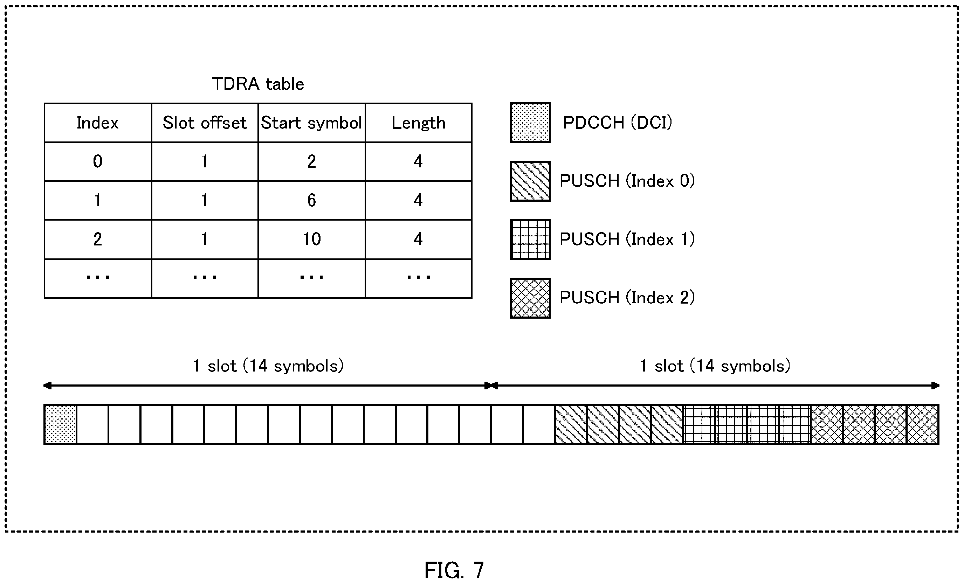

For example, a symbol position for which a first symbol (in other words, a slot boundary) of a slot is used as a reference is configured to the start symbol position, at which transmission or reception of data is started, in a slot. FIGS. 6 and 7 illustrate examples of time resource allocation by the TDRA field in DCI. FIG. 6 illustrates an example of time resource allocation with respect to downlink data (for example, PDSCH), and FIG. 7 illustrates an example of time resource allocation with respect to uplink data (for example, PUSCH).

Note that, in the following description, the first symbol in a slot is referred to as the zeroth symbol. In other words, in FIGS. 6 and 7, 1 slot includes 14 symbols from the zeroth symbol through the thirteenth symbol.

In URLLC, low latency can be realized by allowing a plurality of data channels (for example, PDSCH or PUSCH), which include a fewer number of symbols to be assigned, to be assigned in a slot, for example. Further, in URLLC, it is possible to shorten the time from packet generation to scheduling by configuring that the frequency at which the terminal receives DCI is not a 1 slot interval (for example, PDCCH is received in first several symbols in each slot) as in eMBB, for example, but a plurality of times in 1 slot.

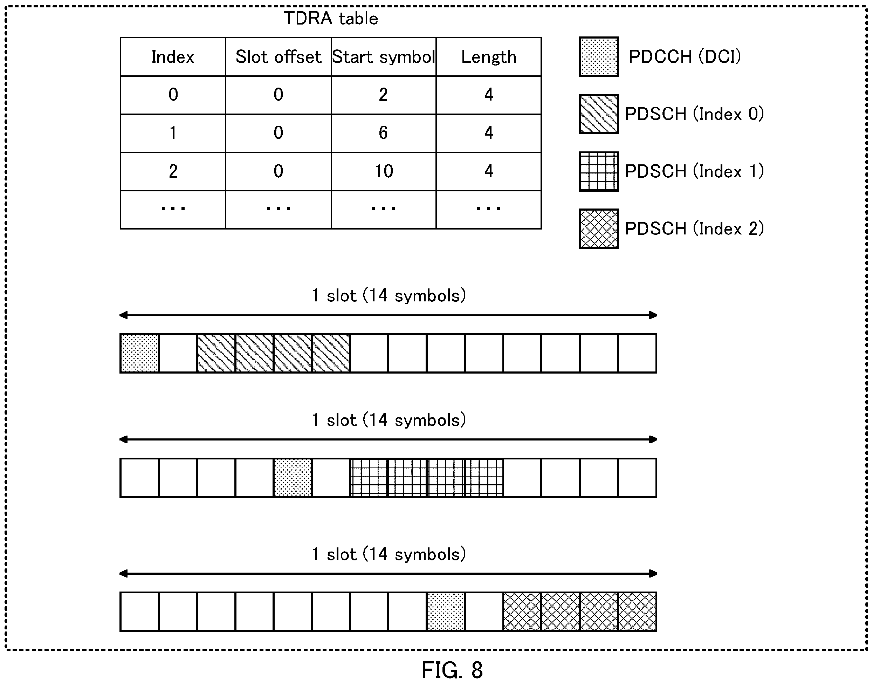

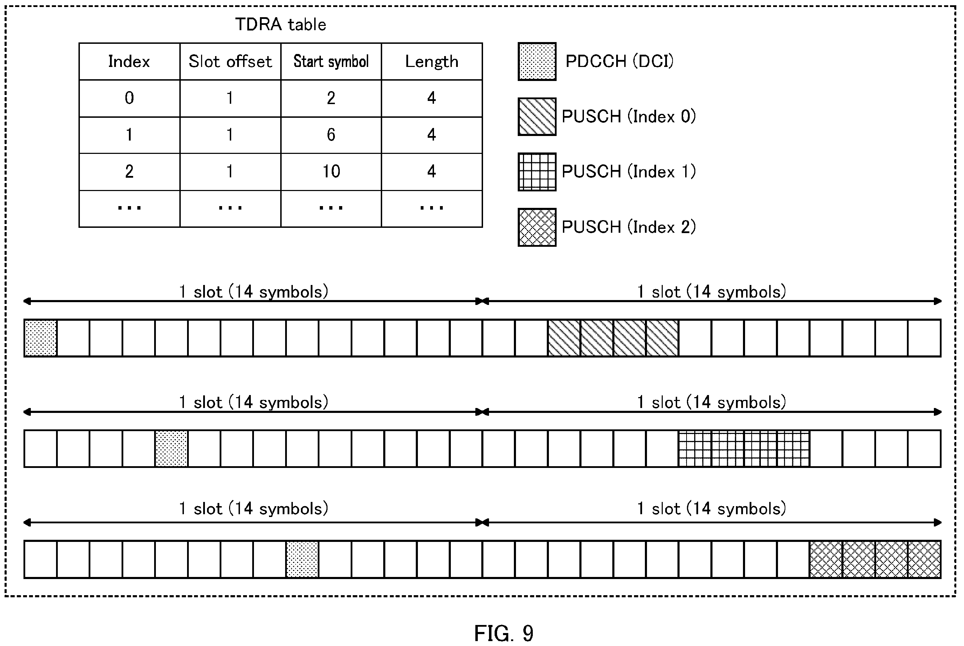

FIGS. 8 and 9 illustrate examples of time resource allocation in a case where the terminal can receive PDCCH (including DCI, for example) in 1 slot a plurality of times. FIG. 8 illustrates an example of time resource allocation with respect to PDSCH and FIG. 9 illustrates an example of time resource allocation with respect to PUSCH.

In Release 15, for example, in a case where start symbol positions, at which transmission or reception of data is started, in a slot are different, a plurality of different allocation patterns (for example, a plurality of patterns with different Start symbols and the same Length) is configured even in the case of time resource allocations with the same number of symbols (for example, Length). For example, in FIGS. 8 and 9, in a case where a data channel of 4-symbol length (Length = 4) can be assigned, three allocation patterns with different start symbol positions, at which transmission or reception of data is started, in a slot are configured. Thus, the number of allocation patterns can increase as start symbol position candidates, at which transmission or reception of data is started, in a slot increase. An increase in the number of allocation patterns leads to an increase in the number of bits in the TDRA field in DCI. It is inefficient to configure a plurality of different allocation patterns with respect to data allocations with the same symbol length as such.

Accordingly, in Release 16, it has been discussed that among the parameters included in an allocation pattern for allocating a time resource, a reference (also referred to as a reference point, for example) for a symbol position (for example, a start symbol position at which transmission or reception of data is started) to be assigned to data in a slot is configured to a symbol position, at which the terminal has received a PDCCH including DCI (see NPL 7, for example), in the slot instead of a first symbol of a slot in Release 15.

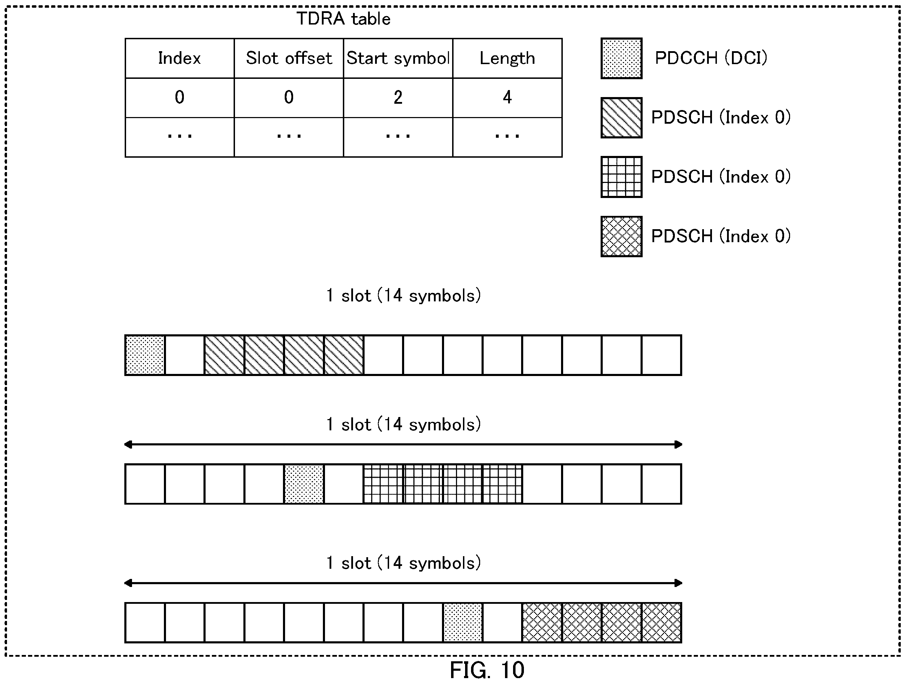

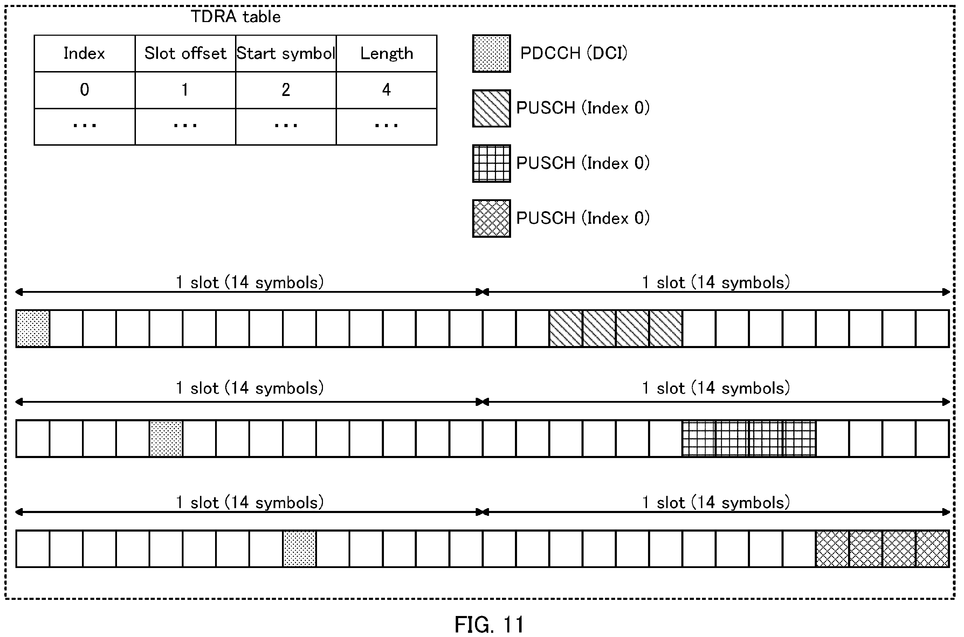

FIGS. 10 and 11 illustrates examples of time resource allocation in the case of using as a reference a symbol position at which a PDCCH is received. FIG. 10 illustrates an example of time resource allocation with respect to PDSCH and FIG. 11 illustrates an example of time resource allocation with respect to PUSCH.

For example, in the example illustrated in FIG. 10 (in a case where Index = 0 is indicated), the terminal determines, as a reference, a symbol position which corresponds to a symbol position (for example, the zeroth symbol, the fourth symbol, or the eighth symbol), at which a PDCCH (including DCI) has been received, in a certain slot and which is in the same slot (for example, Slot offset = 0) as the slot in which the PDCCH has been received. Then, the terminal configures, as a start symbol position of a PDSCH, a symbol position (for example, the second symbol, the sixth symbol, or the tenth symbol) that is the second symbol (for example, Start symbol = 2) from the reference.

Further, for example, in the example illustrated in FIG. 11 (in a case where Index = 0 is indicated), the terminal determines, as a reference, a symbol position which corresponds to a symbol position (for example, the zeroth symbol, the fourth symbol, or the eighth symbol), at which a PDCCH (including DCI) has been received, in a certain slot and which is in a slot (for example, Slot offset = 1) following the slot in which the PDCCH has been received. Then, the terminal configures, as a start symbol position of a PUSCH, a symbol position (for example, the second symbol, the sixth symbol, or the tenth symbol) that is the second symbol (for example, Start symbol = 2) from the reference.

As illustrated in FIGS. 10 and 11, even in a case where one allocation pattern is indicated, a time resource (for example, a symbol position) to be allocated to a PDSCH or a PUSCH varies depending on a symbol position, at which the terminal has received a PDCCH, in a slot.

For example, in a case where the terminal can receive DCI in 1 slot a plurality of times, time resource allocation for a PDSCH or a PUSCH is configured in accordance with a reference based on a symbol position, at which a PDCCH is received, in the slot so that allocations with the same slot length (for example, 4 symbols in FIGS. 10 and 11) can be configured by one allocation pattern. This allocation pattern configuration makes it possible to reduce the number of bits in the TDRA field in DCI. Further, for example, in a case where the number of bits in the TDRA field is fixed, it is possible to configure an allocation pattern of another time resource so that the flexibility of time resource allocation can be improved.

In Release 16 URLLC, for example, technology (for example, referred to as "enhanced PUSCH transmission" (for example, PUSCH enhancement)) that allows processing with respect to PUSCH such as repeated transmission (also referred to as "repetition") per mini slot or resource allocation over a plurality of slots to be flexibly configured has been discussed (see, for example, NPL 5). The enhanced PUSCH transmission makes it possible to realize, for example, transmission of uplink data (for example, PUSCH) with low latency and highly reliability.

In the enhanced PUSCH transmission, control of the number of repeated transmissions (also referred to as a repetition number) or time resource allocation (for example, at least one of the start symbol position and the symbol length) with respect to each repeated transmission by DCI, for example, has been discussed. However, time resource allocation using a symbol position, at which a PDCCH is received, as a reference in the enhanced PUSCH transmission has not been sufficiently discussed.

For example, in the enhanced PUSCH transmission, commonization of DCI for control of time resource allocation with respect to each repeated transmission has been discussed. For example, a method in which a base station indicates a terminal of an allocation pattern for allocating a time resource with respect to each repeated transmission in a common TDRA field has been discussed. This method makes it possible to reduce control information overhead.

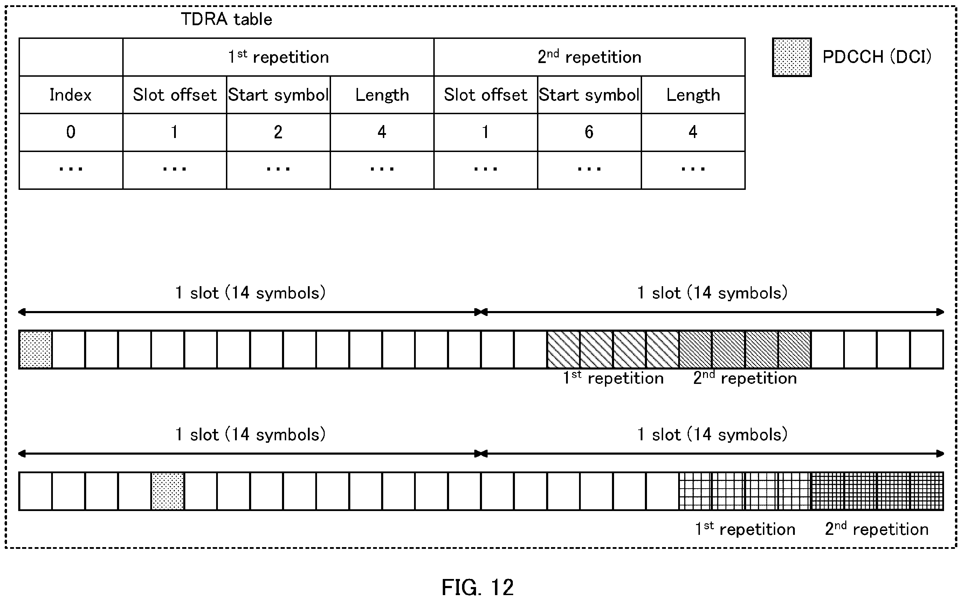

FIG. 12 illustrates an example of time resource allocation with respect to repeated transmission. In FIG. 12, the number of repeated transmissions is two (the first PUSCH transmission (1^{st} repetition) and the second PUSCH transmission (2^{nd} repetition)) as an example. Note that, the number of repeated transmissions is not limited to two, but may be three or more times.

For example, a plurality of allocation patterns for allocating a time resource with respect to each repeated transmission illustrated in FIG. 12 may be configured from a base station to a terminal by a higher-layer (for example, RRC) signaling. For example, in the TDRA field in DCI, the base station indicates one allocation pattern out of the plurality of allocation patterns configured to the terminal to the terminal and allocates the time resource to the terminal. At this time, as illustrated in FIG. 12, a start symbol position of time resource allocation with respect to each repeated transmission may be determined in accordance with a reference based on a symbol position at which a PDCCH is received as described above, for example. With this reference configuration, for example, in a case where the terminal can receive DCI in 1 slot a plurality of times, allocations of time resources with the same repetition number and the same symbol length of each repeated transmission can be configured by one allocation pattern.

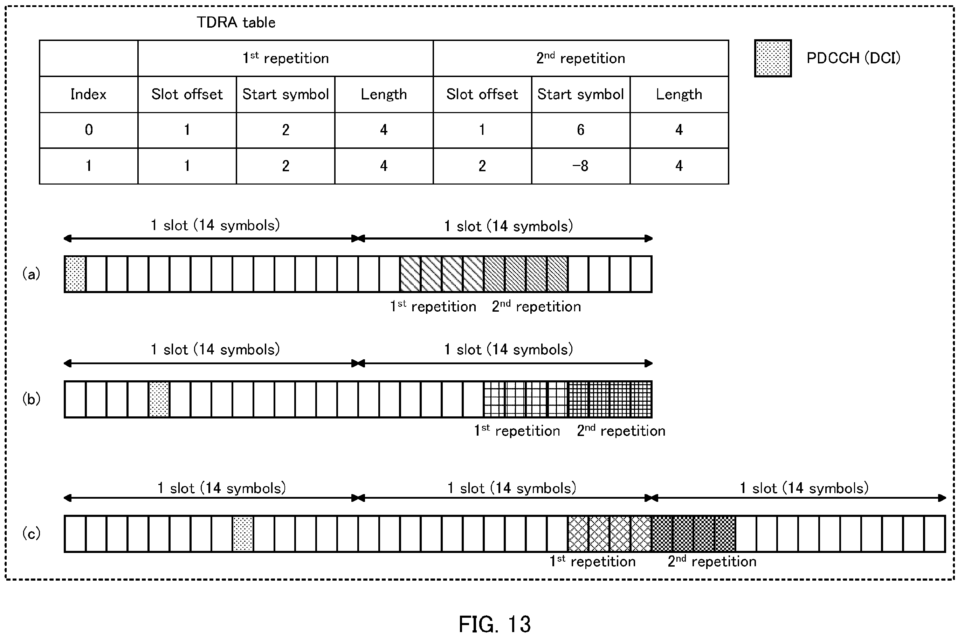

However, as illustrated in FIG. 13, for example, in a case where repeated transmission is configured over a plurality of slots, allocations of time resources with the same repetition number and the same symbol length of each repeated transmission may not be configured by one allocation pattern.

Time resource allocations illustrated in FIGS. 13(a), 13(b) and 13(c) are examples of allocation in which the repetition number and the symbol length of each repeated transmission are the same (the repetition number: two, and the symbol length: 4 symbols). For example, in the examples illustrated in FIGS. 13(a) and 13(b), data to be repeatedly transmitted is assigned in one slot. Accordingly, each time resource allocation illustrated in FIGS. 13(a) and 13(b) can be configured by one allocation pattern (for example, Index = 0).

On the other hand, in the example illustrated in FIG. 13(c), for example, data to be repeatedly transmitted is assigned over two slots. Thus, the time resource allocation illustrated in FIG. 13(c) can be configured by an allocation pattern (for example, Index = 1) different from the allocation pattern (for example, Index = 0) for FIGS. 13(a) and 13(b). In other words, the time resource allocations in the examples illustrated in FIGS. 13(a), 13(b) and 13(c), although the repetition number and the symbol length of each repeated transmission are the same therein, can be configured by a plurality of allocation patterns.

Further, in a case where a reference based on a symbol position at which a PDCCH is received is followed and in a case where data to be repeatedly transmitted is assigned over a plurality of slots (for example, in the case of FIG. 13(c)), a symbol position prior to the reference is also configured in the plurality of slots so that the range for configuring a start symbol position at which transmission or reception of data is started is, for example, -13 to 13. For example, in a case where a reference based on the beginning of a slot is followed in Release 15, the range for configuring a start symbol position at which transmission or reception of data is started is, for example, 0 to 13 so that higher-layer signalling overhead increases in a case where a reference based on a symbol position at which a PDCCH is received is followed (in the case of the range of -13 to 13).

Further, for example, in a case where the range for configuring a start symbol position, at which transmission or reception of data is started, in a slot (for example, the range for a Start symbol) is configured to be 0 to 13, the terminal performs processing of determining whether a start symbol position of the data identified in accordance with a reference based on a position at which a PDCCH is received is the same as a slot indicated by a slot offset (Slot offset) of a time resource pattern so that time resource identification-related processing in the terminal may become complicated. For example, the terminal determines whether values indicated by a symbol position at which a PDCCH is received (for example, any of the zeroth symbol to the thirteenth symbol) and a start symbol position of a time resource pattern (for example, any of 0 to 13) exceed the number of symbols in the slot (for example, 14).

Further, in the enhanced PUSCH transmission, the terminal cannot transmit a signal in a symbol configured as a downlink (DL) symbol (or a flexible symbol). Accordingly, for example, in a case where a time resource (or a time resource pattern) of a PUSCH assigned by DCI includes a symbol configured as a DL symbol (or a flexible symbol), dropping (in other words, non-transmission) of transmission of the PUSCH assigned to the symbol or transmission postponement until the next transmission opportunity (for example, an uplink symbol) has been discussed. Note that, the terminal can identify the position of the DL symbol in the slot by indication of control information (for example, Slot Format Indicator (SFI)), for example.

At this time, for example, in a case where the above-mentioned reference based on a position at which a PDCCH is received is followed for a start symbol position (for example, Start symbol) in time resource allocation with respect to each repeated transmission, the terminal performs processing of determining whether a time resource to be indicated matches a DL symbol (or a flexible symbol) so that the time resource identification-related processing in the terminal may become complicated.

Accordingly, in an exemplary embodiment of the present disclosure, for example, a description will be given of a method of improving efficiency of time resource allocation in URLLC. According to an exemplary embodiment of the present disclosure, for example, it is possible to improve the efficiency of time resource allocation in URLLC, and it is possible to restrain time resource identification processing in a terminal from becoming complicated.

For example, in an exemplary embodiment of the present disclosure, a terminal switches whether a start symbol position, which is indicated by DCI and at which transmission or reception of data is started, is determined by a reference based on a first symbol position in a slot or by a reference based on a symbol position at which a PDCCH is received, based on a certain condition (whose examples will be described later).

### [Overview of Communication System]

A communication system according to each embodiment of the present disclosure includes base station 100 and terminal 200.

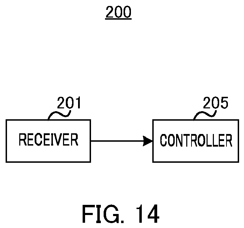

FIG. 14 is a block diagram illustrating a configuration example of a part of terminal 200 according to an exemplary embodiment of the present disclosure. In terminal 200 illustrated in FIG. 14, receiver 201 (corresponding to the reception circuitry, for example) receives control information in downlink (for example, DCI). Controller 205 (corresponding to the control circuitry, for example) controls, in control of mapping data (for example, PDSCH or PUSCH) with respect to a time resource based on the control information, a reference for a position (for example, a symbol position) at which the data is mapped in the time resource, based on a certain condition.

### [Configuration of Base Station]

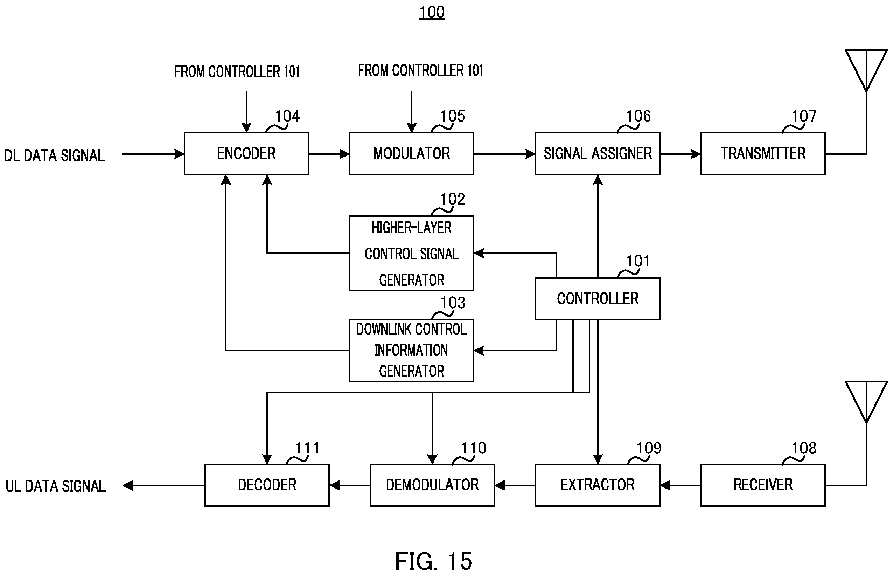

FIG. 15 is a block diagram illustrating a configuration example of base station 100 according to Embodiment 1. In FIG. 15, base station 100 includes controller 101, higher-layer control signal generator 102, downlink control information generator 103, encoder 104, modulator 105, signal assigner 106, transmitter 107, receiver 108, extractor 109, demodulator 110, and decoder 111.

Controller 101, for example, determines information on DCI reception in terminal 200, and outputs the determined information to higher-layer control signal generator 102. The information on DCI reception may include information such as control resource set (CORESET) configuration, search space configuration, or symbol configuration in 1 slot in which the terminal receives a PDCCH, for example.

Further, controller 101, for example, determines configuration information (referred to as Radio Resource Control (RRC) configuration information, for example) including a higher-layer parameter with respect to terminal 200, and outputs the determined RRC configuration information to higher-layer control signal generator 102. The RRC configuration information may include, for example, information on an allocation pattern for allocating a time resource indicated in the TDRA field in DCI.

Further, controller 101 determines information on a downlink signal for transmitting a downlink data signal (for example, PDSCH), a higher-layer control signal, or downlink control information (for example, DCI). The information on a downlink signal may include information such as a Modulation and Coding Scheme (MCS) and radio resource allocation, for example. Further, the information on a downlink signal may include, for example, information on TDRA or information on repeated transmission (for example, repetition). Controller 101, for example, outputs the determined information to encoder 104, modulator 105, and signal assigner 106. Further, controller 101 outputs the information on a downlink signal to downlink control information generator 103.

Further, controller 101 determines information for terminal 200 to transmit an uplink data signal (for example, PUSCH), and outputs the determined information to downlink control information generator 103, extractor 109, demodulator 110, and decoder 111. The information for transmitting an uplink data signal may include, for example, a Modulation and Coding Scheme and radio resource allocation. Further, the information for transmitting an uplink data signal may include, for example, information on TDRA or information on repeated transmission (for example, repetition).

Higher-layer control signal generator 102 generates a higher-layer control signal bit string based on information inputted from controller 101 (for example, information on DCI reception or RRC configuration information), and outputs the higher-layer control signal bit string to encoder 104.

Downlink control information generator 103 generates a downlink control information (for example, DCI) bit string based on information inputted from controller 101, and outputs the generated DCI bit string to encoder 104. Note that, the control information may be transmitted to a plurality of terminals. Accordingly, downlink control information generator 103 may scramble a PDCCH transmitting DCI by UE-specific identification information. The UE-specific identification information may be any of information such as, for example, Cell Radio Network Temporary Identifier (C-RNTI) and Modulation and Coding Scheme C-RNTI (MCS-C-RNTI), or may be any other information (for example, other RNTI). The other RNTI may be, for example, RNTI that is introduced for URLLC.

Encoder 104, for example, encodes downlink data, a bit string inputted from higher-layer control signal generator 102, or a DCI bit string inputted from downlink control information generator 103 based on information (for example, information on the coding rate) inputted from controller 101. Encoder 104 outputs the encoded bit string to modulator 105.

Modulator 105, for example, modulates an encoded bit string inputted from encoder 104 based on information (for example, information on the modulation scheme) inputted from controller 101, and outputs the modulated signal (for example, a symbol string) to signal assigner 106.

Signal assigner 106 maps a symbol string (including, for example, downlink data or a control signal) inputted from modulator 105 to a radio resource based on radio resource-indicating information inputted from controller 101. Signal assigner 106 outputs a downlink signal with the mapped signal to transmitter 107.

Transmitter 107 performs transmission waveform generation processing including orthogonal frequency division multiplexing (OFDM), for example, on a signal inputted from signal assigner 106. Further, in the case of an OFDM transmission in which a cyclic prefix (CP) is added, transmitter 107 performs inverse fast Fourier transform (IFFT) processing on a signal, and adds a CP to the signal subjected to IFFT. Further, transmitter 107 performs RF processing including D/A conversion and up-conversion on a signal, and transmits a radio signal to terminal 200 via an antenna.

Receiver 108 performs RF processing including down-conversion or A/D conversion on an uplink signal received from terminal 200 via an antenna. Further, in the case of an OFDM transmission, receiver 108 performs fast Fourier transform (FFT) processing on a received signal, and outputs the resulting frequency-domain signal to extractor 109.

Extractor 109 extracts a radio resource part with which an uplink signal to be transmitted by terminal 200 is transmitted based on information inputted from controller 101, and outputs the extracted radio resource part to demodulator 110.

Demodulator 110 demodulates a signal (for example, uplink data) inputted from extractor 109 based on information inputted from controller 101. Demodulator 110, for example, outputs a demodulation result to decoder 111.

Decoder 111 performs error correction decoding on uplink data based on information inputted from controller 101 and a demodulation result inputted from demodulator 110 to obtain a reception bit sequence after decoding.

### [Configuration of Terminal]

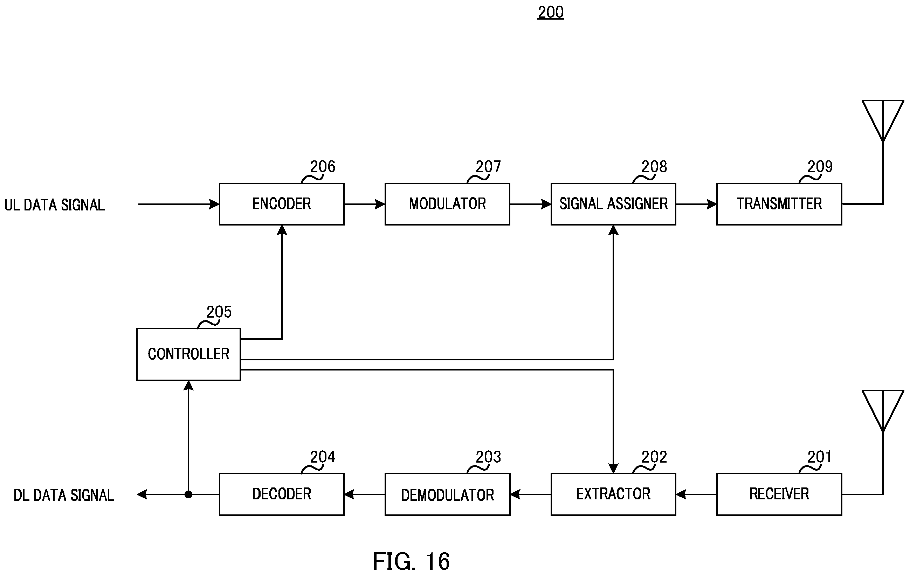

FIG. 16 is a block diagram illustrating a configuration example of terminal 200 according to an exemplary embodiment of the present disclosure. For example, in FIG. 16, terminal 200 includes receiver 201, extractor 202, demodulator 203, decoder 204, controller 205, encoder 206, modulator 207, signal assigner 208, and transmitter 209.

Receiver 201 receives a downlink signal (for example, downlink data or downlink control information) from base station 100 via an antenna, performs RF processing including down-conversion or A/D conversion on the received radio signal to obtain a received signal (baseband signal). Further, in the case of receiving an OFDM signal, receiver 201 performs FFT processing on the received signal to convert the received signal into that in the frequency domain. Receiver 201 outputs the received signal to extractor 202.

Extractor 202 extracts a radio resource part, which may include downlink control information, from a received signal inputted from receiver 201 based on information on a radio resource in downlink control information inputted from controller 205, and outputs the radio resource part to demodulator 203. Further, extractor 202 extracts a radio resource part, which may include downlink data, based on information on a radio resource of a data signal inputted from controller 205, and outputs the radio resource part to demodulator 203.

Demodulator 203 demodulates a signal inputted from extractor 202, and outputs a demodulation result to decoder 204.

Decoder 204 performs error correction decoding on a demodulation result inputted from demodulator 203 to obtain, for example, downlink reception data, a higher-layer control signal, or downlink control information. Decoder 204 outputs the higher-layer control signal and the downlink control information to controller 205, and outputs the downlink reception data. Further, decoder 204 may generate a response signal (also referred to as ACK/NACK or HARQ-ACK, for example) based on a decoding result of the downlink reception data.

Controller 205, for example, determines at least one radio resource for a downlink data signal and an uplink data signal based on information on DCI reception and RRC configuration information, which are included in higher-layer control signal information inputted from decoder 204, and information on radio resource allocation included in downlink control information. Controller 205, for example, outputs information indicating the determined radio resource for the downlink data signal to extractor 202, and outputs information indicating the determined radio resource for the uplink data signal to signal assigner 208. Further, for example, controller 205 may determine information on uplink signal transmission based on downlink control information, and output the determined information to encoder 206.

Encoder 206 encodes an uplink data signal based on information inputted from controller 205, and outputs the encoded bit string to modulator 207.

Modulator 207 modulates an encoded bit string inputted from encoder 206, and outputs the modulated signal (symbol string) to signal assigner 208.

Signal assigner 208 maps a signal inputted from modulator 207 to a radio resource based on information inputted from controller 205, and outputs an uplink signal with the mapped signal to transmitter 209.

Transmitter 209 performs transmitting signal wave generation including OFDM, for example, on a signal inputted from signal assigner 208. Further, in the case of an OFDM transmission using a CP, transmitter 209 performs IFFT processing on a signal, and adds a CP to the signal subjected to IFFT. Alternatively, in a case where transmitter 209 generates a single-carrier waveform, a Discrete Fourier Transformer (DFT) may be added in a subsequent stage of modulator 207 or in a preceding stage of signal assigner 208 (not illustrated). Further, transmitter 209 performs RF processing including D/A conversion and up-conversion on a transmitting signal, and transmits a radio signal to base station 100 via an antenna.

### [Operation Example of Base Station 100 and Terminal 200]

An operation example of base station 100 and terminal 200 having the above configurations will be described.

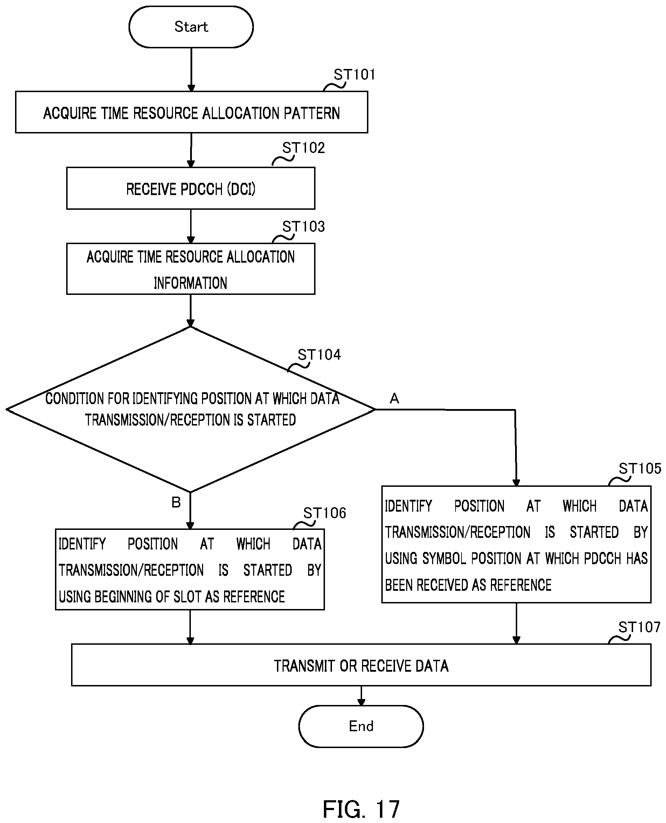

FIG. 17 is a flowchart illustrating an operation example of terminal 200 according to the present embodiment.

In FIG. 17, terminal 200 acquires, for example, information on an allocation pattern for allocating a time resource (ST101). For example, the information on an allocation pattern for allocating a time resource may be configured (in other words, notified or indicated) from base station 100 to terminal 200 by a control signal such as a higher-layer parameter (for example, an RRC parameter) or DCI, or may be preconfigured to terminal 200 in accordance with a standard.

Terminal 200, for example, receives a PDCCH including DCI (ST102). Terminal 200, for example, acquires time resource allocation information (for example, an index indicating any one allocation pattern) included in the DCI (for example, the TDRA field) (ST103).

Terminal 200, for example, determines whether a condition for identifying a symbol position at which transmission or reception of data is started is satisfied (ST104). For example, terminal 200 may determine whether "Condition A" or "Condition B" is satisfied. Note that, examples of Condition A and Condition B will be described later.

In a case where Condition A is satisfied, terminal 200 identifies the symbol position at which the transmission or reception of the data is started in accordance with a reference based on a symbol position at which the PDCCH has been received (ST105).

In a case where Condition B is satisfied, terminal 200 identifies, in accordance with a reference based on a first symbol position in a slot, the symbol position at which the transmission or reception of the data is started (ST106).

Terminal 200 transmits or receives the data based on the identified symbol position (ST107).

### [Example of Time Resource Allocation]

Next, an example of time resource allocation will be described.

In the present embodiment, for example, terminal 200 supports repetition. For example, terminal 200 supports at least one of PUSCH repeated transmission and reception of PDSCH repeatedly transmitted from base station 100.

Further, a time resource of a PUSCH transmitted by terminal 200 (also referred to as "PUSCH resource", for example) or a time resource of a PDSCH received by terminal 200 (also referred to as "PDSCH resource", for example) may be controlled by the TDRA field included in DCI, for example.

For example, a plurality of allocation patterns for allocating a time resource may be configured from base station 100 to terminal 200 by a higher-layer (for example, RRC) signaling. For example, an allocation pattern for allocating a time resource may be associated with information (for example, an index) for identifying each allocation pattern. In the TDRA field in DCI, base station 100 indicates one allocation pattern (for example, an index) of the plurality of allocation patterns configured to terminal 200 to terminal 200, and allocates the time resource to terminal 200.

Note that, an allocation pattern for allocating a time resource to be configured to terminal 200 may include, for example, parameters such as a slot offset (for example, Slot offset), a start symbol position (for example, Start symbol), at which transmission or reception of data is started, in a slot, and the number of symbols (for example, Length). Note that, the parameters included in an allocation pattern is not limited thereto, but may be other time resource-related parameters. For example, in the case of PUSCH repeated transmission or PDSCH repeated reception, an allocation pattern may include a parameter relating to the number of repeated transmissions or time resource allocation with respect to each repeated transmission.

In the present embodiment, terminal 200 may identify a time resource (for example, a symbol position in a slot) to be allocated to data based on Operation Example 1-1, 1-2 or 1-3 described below, for example.

### <Operation Example 1-1>

In Operation Example 1-1, terminal 200 controls, in control of mapping a PUSCH or a PDSCH with respect to a time resource based on DCI, a reference (for example, a reference point) for a position at which the PUSCH or the PDSCH is mapped in the time resource, based on whether repetition is applied to PUSCH transmission or PDSCH reception. In other words, terminal 200 switches between references for a position at which the PUSCH or the PDSCH is mapped in the time resource, based on whether the repetition is applied to the data.

For example, in a case where PUSCH is not repeatedly transmitted or in a case where PDSCH is not repeatedly received, terminal 200 identifies a first symbol position, at which transmission or reception of data is started, in a slot in accordance with a reference based on a symbol position, at which a PDCCH including DCI has been received, in the slot.

In a case where PUSCH is repeatedly transmitted or in a case where PDSCH is repeatedly received, on the other hand, terminal 200 identifies a start symbol position, at which transmission or reception of data is started, in a slot in accordance with a reference based on a first symbol of the slot, for example.

In other words, in Operation Example 1-1, Condition A in FIG. 17 is the repetition is not applied to terminal 200, and Condition B is that the repetition is applied to terminal 200.

Note that, base station 100 may indicate a different allocation pattern depending on whether the repetition is applied to terminal 200.

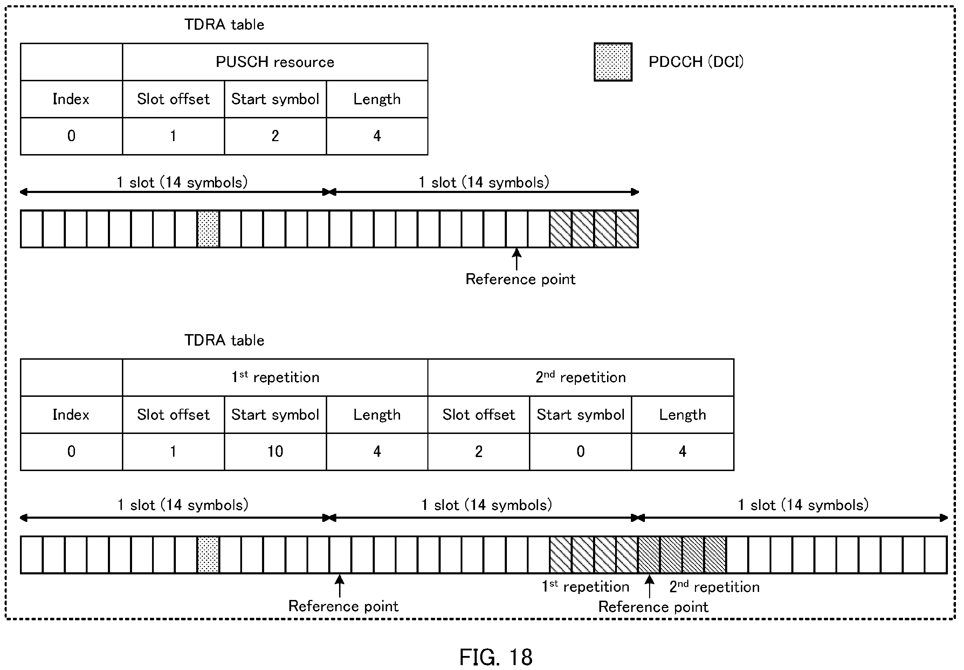

FIG. 18 illustrates an example of time resource allocation of PUSCH according to Operation Example 1-1. For example, the upper half of FIG. 18 illustrates an allocation pattern for allocating a time resource (for example, a TDRA table) corresponding to the case where the repetition is not applied to terminal 200, and an example of time resource allocation. Further, the lower half of FIG. 18 illustrates an allocation pattern for allocating a time resource (for example, a TDRA table) corresponding to the case where the repetition is applied to terminal 200, and an example of time resource allocation.

As illustrated in FIG. 18, parameters (for example, values of the parameters or the number of the parameters) included in the same allocation pattern (for example, Index = 0) may vary depending on whether the repetition is applied to terminal 200.

For example, as illustrated in the upper half of FIG. 18, in the case where the repetition is not applied to terminal 200, terminal 200 identifies, in accordance with a reference based on a symbol in which a PDCCH including DCI is received, a symbol position in a slot, where the symbol position is included in an allocation pattern with respect to a PUSCH resource and is a position at which data is mapped.

For example, in the upper half of FIG. 18, terminal 200 receives a PDCCH in the eighth symbol in a certain slot. Further, in the upper half of FIG. 18, Index = 0 is indicated to terminal 200 in the TDRA field in DCI included in the received PDCCH. Thus, in the upper half of FIG. 18, terminal 200 determines, as a reference for a position at which a PUSCH is mapped, the eighth symbol (in other words, a symbol position corresponding to the symbol position at which the PDCCH has been received in the other slot) in a slot (for example, Slot offset = 1) following the slot in which the PDCCH has been received. Then, terminal 200 identifies, as a start symbol position at which PUSCH transmission is started, the tenth symbol as a symbol position that is the second symbol (for example, Start symbol = 2) from the reference in the slot following the slot in which the PDCCH has been received, for example. For example, in the upper half of FIG. 18, the symbol length is 4 symbols (Length = 4) so that terminal 200 transmits a PUSCH in 4 symbols from the tenth symbol through the thirteenth symbol in the slot.

Further, for example, as illustrated in the lower half of FIG. 18, in the case where the repetition is applied to terminal 200, terminal 200 identifies, in accordance with a reference based on a first symbol of a slot, a symbol position in the slot, where the symbol position is included in an allocation pattern with respect to a PUSCH resource and is a position at which data is mapped.

For example, in the lower half of FIG. 18, terminal 200 receives a PDCCH in the eighth symbol in a certain slot. Further, in the lower half of FIG. 18, Index = 0 is indicated to terminal 200 in the TDRA field in DCI included in the received PDCCH. Thus, in the lower half of FIG. 18, terminal 200 determines, as a reference for a position at which a PUSCH is mapped, the zeroth symbol in a slot (for example, Slot offset = 1) following the slot in which the PDCCH has been received. Then, terminal 200 identifies, as a start symbol position at which PUSCH transmission in 1^{st} repeated transmission is started, the tenth symbol as a symbol position that is the tenth symbol (for example, Start symbol = 10) from the reference in the slot following the slot in which the PDCCH has been received, for example. In the same manner, in the lower half of FIG. 18, terminal 200 determines, as a reference for a position at which a PUSCH is mapped, the zeroth symbol (top symbol) in a slot (for example, Slot offset = 2) that is the second slot after the slot in which the PDCCH has been received. Then, terminal 200 identifies, as a start symbol position at which PUSCH transmission in 2^{nd} repeated transmission is started, the zeroth symbol (top symbol) as a symbol position that is the zeroth symbol (for example, Start symbol = 0) from the reference in the slot that is the second slot after the slot in which the PDCCH has been received, for example. For example, in the lower half of FIG. 18, the symbol length in each repeated transmission is 4 symbols (Length = 4) so that terminal 200 transmits a PUSCH in 4 symbols from the tenth symbol through the thirteenth symbol in the slot that is the first slot after the slot in which the PDCCH has been received, and in 4 symbols from the zeroth symbol through the third symbol in the slot that is the second slot after the slot in which the PDCCH has been received.

Note that, although an example of PUSCH resource allocation has been described in FIG. 18, PDSCH resource allocation may also be operated depending on whether repetition is applied in the same manner.

According to Operation Example 1-1, when repetition is applied, a time resource is determined by using a first symbol of a slot as a reference so that terminal 200 may not determine whether a start symbol position of data to be identified is identical to a slot indicated by a slot offset of a time resource pattern, for example. Thus, even in a case where repetition to be applied to PUSCH is configured over a plurality of slots (for example, the lower half of FIG. 18), terminal 200 can easily identify a time resource that can be used for PUSCH transmission.

Further, for example, base station 100 indicates terminal 200 of a symbol to be configured as a DL symbol (or a flexible symbol) in a slot by SFI which is information per slot, for example. Thus, in a case where repetition is applied to PUSCH, terminal 200 can determine whether each symbol included in a PUSCH resource can be used by comparing DL symbol (or flexible symbol) configuration per slot with PUSCH resource configuration per slot. With this determination, terminal 200 can easily identify a time resource that can be used for PUSCH transmission even in a case where a time resource pattern of a PUSCH assigned by DCI includes a symbol configured as a DL symbol (or a flexible symbol) (not illustrated), for example.

Thus, according to Operation Example 1-1, it is possible to restrain time resource identification-related processing in terminal 200 from becoming complicated.

Further, when repetition is applied, a time resource is determined by using a first symbol of a slot as a reference so that the range for configuring a start symbol position of data is, for example, 0 to 13, and it is possible to restrain an increase in higher-layer signalling overhead as in the example illustrated in FIG. 13, for example.

Further, according to Operation Example 1-1, in a case where no repetition is applied, terminal 200 determines a time resource of a PDSCH or a PUSCH in accordance with a reference based on a symbol position at which a PDCCH is received. With this allocation, for example, allocation of the same symbol length can be configured by one allocation pattern. Thus, according to Operation Example 1-1, for example, it is possible to reduce the number of bits in the TDRA field in DCI. Alternatively, according to Operation Example 1-1, for example, in a case where the number of bits in the TDRA field is fixed, it is possible to configure an allocation pattern of another time resource so that the flexibility of time resource allocation can be improved.

### <Operation Example 1-2>

In Operation Example 1-2, terminal 200 controls, in control of mapping a PUSCH or a PDSCH with respect to a time resource based on DCI, a reference (for example, a reference point) for a position at which the PUSCH or the PDSCH is mapped in the time resource, based on whether repeatedly transmitted PUSCH or repeatedly received PDSCH is allocated to one slot. In other words, terminal 200 switches between references for a position at which the PUSCH or the PDSCH is mapped in the time resource, based on the number of slots to which data to be subjected to repetition is assigned.

For example, in a case where a time resource of repeatedly transmitted PUSCH or a time resource of repeatedly received PDSCH is included in 1 slot, terminal 200 identifies a start symbol position, at which transmission or reception of data is started, in a slot in accordance with a reference based on a symbol position, at which a PDCCH including DCI has been received, in the slot.

For example, in a case where a time resource of repeatedly transmitted PUSCH or a time resource of repeatedly received PDSCH is configured over a plurality of slots, on the other hand, terminal 200 identifies a start symbol position, at which transmission or reception of data is started, in a slot in accordance with a reference based on a first symbol of the slot.

In other words, in Operation Example 1-2, Condition A in FIG. 17 is that data to be subjected to repetition is assigned to 1 slot, and Condition B is that data to be subjected to repetition is assigned to a plurality of slots.

Note that, base station 100 may indicate a different allocation pattern depending on whether data to be subjected to repetition is assigned to one slot or a plurality of slots.

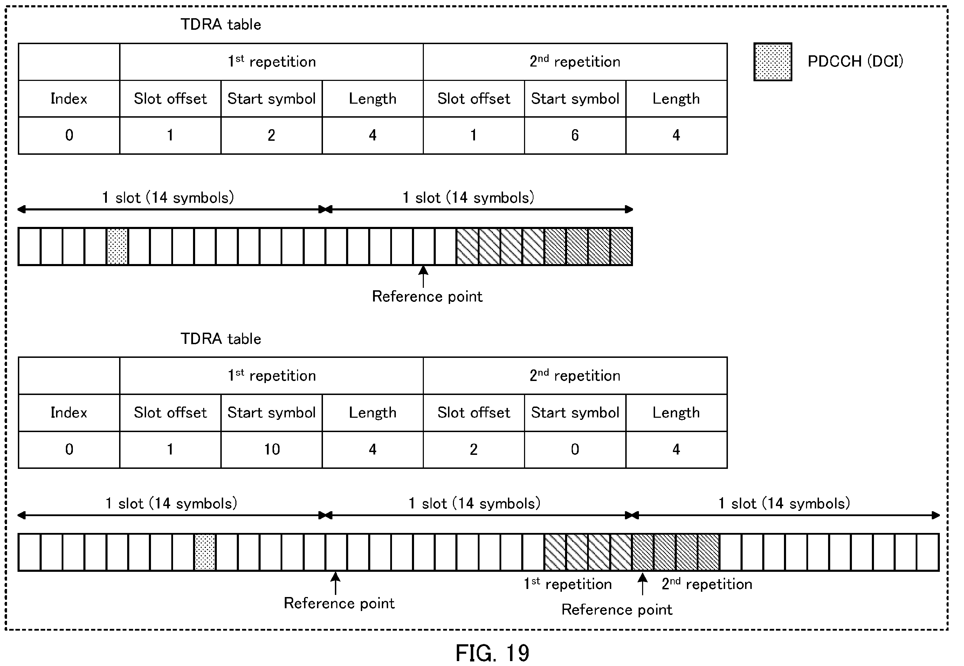

FIG. 19 illustrates an example of time resource allocation according to Operation Example 1-2. For example, the upper half of FIG. 19 illustrates an allocation pattern for allocating a time resource (for example, a TDRA table) corresponding to the case where a time resource of PUSCH to be subjected to repetition is included in 1 slot, and an example of time resource allocation. Further, the lower half of FIG. 19 illustrates an allocation pattern for allocating a time resource (for example, a TDRA table) corresponding to the case where a time resource of PUSCH to be subjected to repetition is configured over a plurality of slots, and an example of time resource allocation.

As illustrated in FIG. 19, parameters (for example, values of the parameters) included in the same allocation pattern (for example, Index = 0) may vary depending on whether a time resource of PUSCH to be subjected to repetition is included in 1 slot or is configured over a plurality of slots.

For example, in the upper half of FIG. 19, terminal 200 identifies, in accordance with a reference based on a symbol in which a PDCCH including DCI is received, a symbol position in a slot, where the symbol position is included in an allocation pattern with respect to a PUSCH resource and is a position at which data is mapped.

For example, in the upper half of FIG. 19, terminal 200 receives a PDCCH in the fourth symbol in a certain slot. Further, in the upper half of FIG. 19, Index = 0 is indicated to terminal 200 in the TDRA field in DCI included in the received PDCCH. Thus, in the upper half of FIG. 19, terminal 200 determines, as a reference for a position at which a PUSCH is mapped, the fourth symbol (in other words, a symbol position corresponding to the symbol position at which the PDCCH has been received in the other slot) in a slot (for example, Slot offset = 1) following the slot in which the PDCCH has been received. Then, terminal 200 identifies, as a start symbol position at which PUSCH transmission in 1^{st} repeated transmission is started, the sixth symbol as a symbol position that is the second symbol (for example, Start symbol = 2) from the reference in the slot following the slot in which the PDCCH has been received, for example. In the same manner, in the upper half of FIG. 19, terminal 200 identifies, as a start symbol position at which PUSCH transmission in 2^{nd} repeated transmission is started, the tenth symbol as a symbol position that is the sixth symbol (for example, Start symbol = 6) from the reference in the slot (for example, Slot offset = 1) following the slot in which the PDCCH has been received. For example, in the upper half of FIG. 19, the symbol length in each repeated transmission is 4 symbols (Length = 4) so that terminal 200 transmits a PUSCH in 8 symbols from the sixth symbol through the thirteenth symbol in the slot that is the first slot after the slot in which the PDCCH has been received.

Further, for example, in the lower half of FIG. 19, terminal 200 identifies, in accordance with a reference based on a first symbol of a slot, a symbol position in the slot, where the symbol position is included in an allocation pattern with respect to a PUSCH resource and is a position at which data is mapped.

For example, in the lower half of FIG. 19, terminal 200 receives a PDCCH in the eighth symbol in a certain slot. Further, in the lower half of FIG. 19, Index = 0 is indicated to terminal 200 in the TDRA field in DCI. Thus, in the lower half of FIG. 19, terminal 200 determines, as a reference for a position at which a PUSCH is mapped, the zeroth symbol (top symbol) in a slot (for example, Slot offset = 1) following the slot in which the PDCCH has been received. Then, terminal 200 identifies, as a start symbol position at which PUSCH transmission in 1^{st} repeated transmission is started, the tenth symbol as a symbol position that is the tenth symbol (for example, Start symbol = 10) from the reference in the slot following the slot in which the PDCCH has been received, for example. In the same manner, in the lower half of FIG. 19, terminal 200 determines, as a reference for a position at which a PUSCH is mapped, the zeroth symbol (top symbol) in a slot (for example, Slot offset = 2) that is the second slot after the slot in which the PDCCH has been received. Then, terminal 200 identifies, as a start symbol position at which PUSCH transmission in 2^{nd} repeated transmission is started, the zeroth symbol that is the zeroth symbol (for example, Start symbol = 0) from the reference in the slot that is the second slot after the slot in which the PDCCH has been received, for example. For example, in the lower half of FIG. 19, the symbol length in each repeated transmission is 4 symbols (Length = 4) so that terminal 200 transmits a PUSCH in 4 symbols from the tenth symbol through the thirteenth symbol in the slot that is the first slot after the slot in which the PDCCH has been received, and in 4 symbols from the zeroth symbol through the third symbol in the slot that is the second slot after the slot in which the PDCCH has been received.

Note that, although an example of PUSCH resource allocation has been described in FIG. 19, PDSCH resource allocation may also be operated depending on a slot to which data to be subjected to repetition is assigned in the same manner.

According to Operation Example 1-2, in a case where data subjected to repetition is assigned over a plurality of slots, a time resource is determined by using a first symbol of a slot as a reference so that terminal 200 may not determine whether a start symbol position of data to be identified is identical to a slot indicated by a slot offset of a time resource pattern, for example. Thus, even in a case where repetition to be applied to PUSCH is configured over a plurality of slots (for example, the lower half of FIG. 19), terminal 200 can easily identify a time resource that can be used for PUSCH transmission.

Further, for example, base station 100 indicates terminal 200 of a symbol to be configured as a DL symbol (or a flexible symbol) in a slot by SFI which is information per slot, for example. Thus, in a case where PUSCH to be subjected to repetition is assigned to a plurality of slots, terminal 200 can determine whether each symbol included in a PUSCH resource can be used by comparing DL symbol (or flexible symbol) configuration per slot with PUSCH resource configuration per slot. With this determination, terminal 200 can easily identify a time resource that can be used for PUSCH transmission even in a case where a time resource pattern of a PUSCH assigned by DCI includes a symbol configured as a DL symbol (or a flexible symbol) (not illustrated), for example.

Thus, according to Operation Example 1-2, it is possible to restrain time resource identification-related processing in terminal 200 from becoming complicated.

Further, in a case where data to be subjected to repetition is assigned over a plurality of slots, a time resource is determined by using a first symbol of a slot as a reference so that the range for configuring a start symbol position of data is, for example, 0 to 13, and it is possible to restrain an increase in higher-layer signalling overhead as in the example illustrated in FIG. 13, for example.

Further, according to Operation Example 1-2, in a case where data to be subjected to repetition is assigned to one slot, terminal 200 determines a time resource of a PDSCH or a PUSCH in accordance with a reference based on a symbol position at which a PDCCH is received. With this allocation, for example, allocation of the same symbol length can be configured by one allocation pattern. Thus, according to Operation Example 1-2, for example, it is possible to reduce the number of bits in the TDRA field in DCI. Alternatively, according to Operation Example 1-2, for example, in a case where the number of bits in the TDRA field is fixed, it is possible to configure an allocation pattern of another time resource so that the flexibility of time resource allocation can be improved.

### <Operation Example 1-3>

In Operation Example 1-3, terminal 200 identifies a start symbol position in a slot in parameters included in an allocation pattern for allocating a time resource in accordance with a reference based on a symbol position, at which a PDCCH including DCI has been received, in the slot.

Further, in Operation Example 1-3, terminal 200 applies repetition (for example, PUSCH repeated transmission or PDSCH repeated reception) in a case where a PDCCH has been received in a specific symbol in a slot.

For example, in a case where a condition that a PDCCH (for example, DCI) has been received in a specific symbol in a slot is satisfied, terminal 200 determines, as a reference with respect to PUSCH or PDSCH to be subjected to repetition, a symbol position in the slot assigned to the PUSCH or the PDSCH, where the symbol position corresponds to a position of the symbol in the slot and the position of the symbol is a position at which the DCI has ben received.

On the other hand, terminal 200 does not apply repetition in a case where a PDCCH has been received in a symbol different from a specific symbol in a slot.

The "specific symbol" may be, for example, at least one symbol including a first symbol of each slot. Alternatively, the "specific symbol" may be, for example, at least one symbol near a first symbol of each slot.

According to Operation Example 1-3, repetition is applied in a case where terminal 200 has received a PDCCH in a specific symbol. For example, in a case where the specific symbol is a symbol including a first symbol of each slot, the symbol at which a PDCCH has been received may include a first symbol of a slot. Accordingly, in this case, the same effect as in Operation Example 1-1, for example, is obtained at the time of repetition since a reference based on the symbol position, at which the PDCCH has been received, in a slot is equal to a reference based on a first symbol of the slot.

Note that, in Operation Example 1-3, in a case where a PDCCH has been received in a specific symbol, for example, terminal 200 may also apply repeated transmission of PDSCH or repeated reception of PUSCH to be configured over a plurality of slots. For example, in a case where a condition that a PDCCH (for example, DCI) is received in a specific symbol in a slot is satisfied, terminal 200 determines, as a reference with respect to PUSCH or PDSCH to be subjected to repetition over a plurality of slots, a symbol position in the slot assigned to the PUSCH or the PDSCH, where the symbol position corresponds to a position of the symbol in the slot and the position of the symbol is a position at which the DCI has been received. This operation makes it possible to obtain the same effect as in Operation Example 1-2, for example, in a case where data is subjected to repetition over a plurality of slots.

Operation Example 1-3 has been described thus far.

Given the above, in the present embodiment, for example, terminal 200 controls, in control of mapping data with respect to a time resource based on received DCI, a reference for a position at which the data is mapped in the time resource, based on a certain condition. With this control, for example, terminal 200 switches between references for a position at which the data is mapped, depending on the time resource to which the data is assigned or on application of repetition, so that it is possible to restrain time resource identification-related processing in terminal 200 from becoming complicated, for example. Thus, according to the present embodiment, the efficiency of signal assignment in radio communication such as URLLC can be improved.

### [Variation of Embodiment 1]

In Embodiment 1, for example, in a case where repetition is applied, terminal 200 uses a first symbol of a slot as a reference to identify a start symbol position, at which transmission or reception of data is started, in the slot.

At this time, in a case where terminal 200 can receive DCI in 1 slot a plurality of times, one or a plurality of allocation patterns among allocation patterns for allocating a time resource, which are configured to terminal 200, may be a pattern(s) invalid for PUSCH or PDSCH assignment depending on the PDCCH reception timing.

As an example, it is assumed that an allocation pattern of a PDSCH resource as illustrated in FIG. 8 is configured and terminal 200 can receive a PDCCH in one of the zeroth symbol, the fourth symbol, and the eighth symbol in the slot. In this case, with respect to DCI included in the PDCCH received in the fourth symbol in the slot, PDSCH assignment by Index = 1 (for example, Start symbol = 6) or Index = 2 (for example, Start symbol = 10) corresponding to a reception timing after the PDCCH reception timing is valid. On the other hand, PDSCH assignment by Index = 0 (for example, Start symbol = 2) corresponding to a reception timing prior to the PDCCH reception timing is invalid.

Further, in PUSCH transmission, a duration (for example, "N2 symbol(s)") corresponding to a processing time between DCI reception by terminal 200 and PUSCH generation can be configured. As an example, it is assumed that N2 = 16 symbols, an allocation pattern of a PUSCH resource as illustrated in FIG. 9 is configured, and terminal 200 can receive a PDCCH in one of the zeroth symbol, the fourth symbol, and the eighth symbol in the slot. In this case, with respect to DCI included in the PDCCH received in the fourth symbol in the slot, PUSCH assignment by Index = 1 (for example, Start symbol = 6) or Index = 2 (for example, Start symbol = 10) corresponding to a PUSCH transmission timing after N2 (= 16) symbols from the PDCCH reception timing is valid. On the other hand, PUSCH assignment by Index = 0 (for example, Start symbol = 2) corresponding to a PUSCH transmission timing prior to N2 (= 16) symbols from the PDCCH reception timing is invalid.

Incidentally, in PUSCH repetition, terminal 200 cannot transmit a PUSCH in a symbol to be configured as a DL symbol (or a flexible symbol) as described above. Accordingly, in a case where a time resource pattern of a PUSCH assigned by DCI includes a symbol to be configured as a DL symbol (or a flexible symbol), terminal 200 may, for example, determine dropping (in other words, non-transmission) of transmission of the PUSCH assigned to the symbol or transmission postponement until the next transmission opportunity (for example, an uplink symbol).

Note that, each of these symbols that do not allow PUSCH transmission may also be referred to as "invalid symbol", for example.

In the variation of Embodiment 1, for example, when PUSCH repetition is applied, allocation of a PUSCH resource prior to N2 (for example, N2 = 16) symbols from PDCCH reception by terminal 200 is allowed. Further, for example, terminal 200 may determine, as an invalid symbol, a symbol (or a unit of a PUSCH resource including the symbol) corresponding to a PUSCH resource prior to N2 symbols from PDCCH reception by terminal 200.

For example, terminal 200 may drop transmission of a PUSCH assigned to a symbol determined as an invalid symbol or may postpone PUSCH transmission until the next transmission opportunity (for example, an uplink symbol).

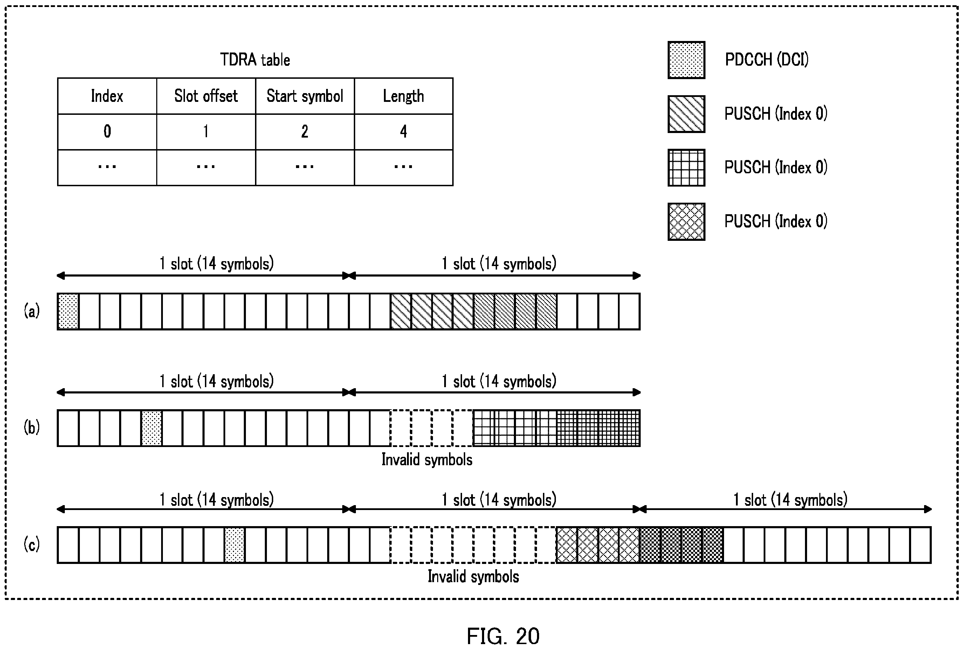

FIG. 20 illustrates an example of time resource allocation in the variation of Embodiment 1. In FIG. 20, N2 = 16 symbols and terminal 200 can transmit a PUSCH after N2 = 16 symbols from PDCCH reception. Further, as an example, Index = 0 is indicated in each DCI of FIG. 20(a), 20(b) and 20(c). Note that, N2 is not limited to 16 symbols, but may be any other number of symbols.

Further, in FIG. 20, for example, in PUSCH repetition, time resource allocation of 1^{st} PUSCH repetition is indicated in the TDRA field. With respect to time resource allocations of 2^{nd} and subsequent repetitions, PUSCH with the same number of symbols as in the 1^{st} PUSCH repetition is assigned for transmission thereof in contiguous symbols. Note that, although the repetition number is two in the example illustrated in FIG. 20, the repetition number may be three or more.

For example, in a case where terminal 200 receives a PDCCH in the zeroth symbol of a certain slot as in FIG. 20(a), the second symbol (for example, Start symbol = 2) of the following slot (for example, Slot offset = 1) is after N2 = 16 symbols from the PDCCH reception. Thus, in FIG. 20(a), terminal 200 starts PUSCH transmission by using a PUSCH time resource indicated by the TDRA field.

On the other hand, for example, in a case where terminal 200 receives a PDCCH in the fourth symbol of a certain slot as in FIG. 20(b), the second symbol (for example, Start symbol = 2) of the following slot (for example, Slot offset = 1) is prior to N2 = 16 symbols from the PDCCH reception, and is an invalid symbol. Thus, in FIG. 20(b), terminal 200 may determine PUSCH transmission postponement and transmit a PUSCH in a valid symbol (for example, after the sixth symbol) after N2 = 16 symbols, for example. Note that, in FIG. 20(b), terminal 200 may determine PUSCH dropping in an invalid symbol.

In the same manner, for example, in a case where terminal 200 receives a PDCCH in the eighth symbol of a certain slot as in FIG. 20(c), the second symbol (for example, Start symbol = 2) of the following slot (for example, Slot offset = 1) is prior to N2 = 16 symbols from the PDCCH reception, and is an invalid symbol. Thus, in FIG. 20(c), terminal 200 may determine PUSCH transmission postponement and transmit a PUSCH in a valid symbol after N2 = 16 symbols (for example, after the tenth symbol), for example. Note that, in FIG. 20(c), terminal 200 may determine PUSCH dropping in an invalid symbol.

In the variation of Embodiment 1, an invalid symbol may be, for example, a symbol prior to N2 symbol(s) from PDCCH reception by terminal 200.

Further, an invalid symbol may also be, for example, an allocation unit of a PUSCH resource including a symbol prior to N2 symbol(s) from PDCCH reception by terminal 200 (for example, a unit of a PUSCH resource indicated in the TDRA field).

Alternatively, an invalid symbol may be, for example, a set of DMRS and PUSCH, which includes a symbol prior to N2 (= 16) symbols from PDCCH reception by terminal 200. In other words, in a case where a DMRS is not included in a symbol(s) obtained by eliminating a symbol(s) prior to N2 symbol(s) from PDCCH reception by terminal 200 from an allocation unit of a PUSCH resource, the entire allocation unit of the PUSCH resource may be configured as an invalid symbol.

According to the variation of Embodiment 1, in a case where a symbol to which data is assigned in a time resource is included in a duration (for example, N2) corresponding to a processing time of data in terminal 200, terminal 200 determines dropping of the data or transmission postponement of the data. With this processing, terminal 200 can use an allocation pattern for allocating a time resource, which is configured to terminal 200, regardless of the timing at which terminal 200 receives a PDCCH, for example. Accordingly, the number of bits of the TDRA field in DCI can be reduced. Alternatively, a time resource can be allocated more flexibly.

Note that, the variation of Embodiment 1 is not only applied to PUSCH repetition, but may also be applied to PDSCH repetition. In the case of PDSCH repetition, for example, a time resource prior to PDCCH reception may be configured as an invalid symbol.

### (Embodiment 2)

In the enhanced PUSCH transmission, the terminal cannot transmit a PUSCH in a symbol configured as a DL symbol (or a flexible symbol) as described above. Thus, for example, in a case where a time resource pattern of a PUSCH assigned by DCI includes a symbol configured as a DL symbol (or a flexible symbol), the terminal can determine dropping of PUSCH transmission in the symbol or PUSCH transmission postponement until the next transmission opportunity (for example, an uplink symbol). Further, the terminal can identify the position of the DL symbol in the slot by indication of SFI, for example.

Further, even with respect to uplink (UL) symbols, the terminal cannot transmit a PUSCH in a symbol in which the terminal or another terminal transmits an uplink control channel (for example, a Physical Uplink Control Channel (PUCCH)) or a reference signal (for example, a Sounding Reference Signal (SRS)).

However, the terminal cannot identify a position of a symbol in which a PUSCH cannot be transmitted (in other words, a symbol in which uplink data transmission is not allowed; hereinafter referred to as "invalid UL symbol"), for example, by SFI.

Accordingly, in the present embodiment, a method in which a terminal identifies a position of an invalid UL symbol will be described.

The configurations of the base station and the terminal according to the present embodiment may be the same as the configurations of base station 100 and terminal 200 according to Embodiment 1.

In the present embodiment, for example, terminal 200 supports repeated transmission (in other words, repetition) of PUSCH.

Further, a time resource of a PUSCH (for example, a PUSCH resource) transmitted by terminal 200 is controlled by the TDRA field in DCI, for example. For example, a plurality of allocation patterns for allocating a time resource is configured to terminal 200 by a higher-layer signalling. Further, one allocation pattern of a plurality of allocation patterns configured to terminal 200 is indicated from base station 100 to terminal 200 by the TDRA field in DCI so that a PUSCH resource is allocated to terminal 200.

Note that, an allocation pattern for allocating a time resource to be configured to terminal 200 may include, for example, parameters such as a slot offset (Slot offset), a start symbol position (Start symbol), at which transmission or reception of data is started, in a slot, and the number of symbols (Length). Further, in a case where repeated transmission of PUSCH or repeated reception of PDSCH is applied to an allocation pattern, for example, the allocation pattern may also include the number of repeated transmissions or time resource allocation with respect to each repeated transmission.

Further, in the present embodiment, base station 100 indicates terminal 200 of invalid UL symbol position-related information, for example. The invalid UL symbol position-related information may be indicated to terminal 200 by DCI (for example, DCI including one allocation pattern), for example. Further, the invalid UL symbol position-related information may be indicated in a field different from the TDRA field and may be included in an allocation pattern for allocating a time resource, which is indicated in the TDRA field.

Further, in the present embodiment, a start symbol position, at which data transmission is started, in a slot and an invalid UL symbol position in a slot differ in terms of references for identifying a symbol position.

For example, terminal 200 identifies a start symbol position in a slot in parameters included in an allocation pattern for allocating a time resource in accordance with a reference based on a symbol position, at which a PDCCH including DCI has been received, in the slot, for example. On the other hand, terminal 200 identifies an invalid UL symbol position in accordance with a reference based on a first symbol of a slot, for example.

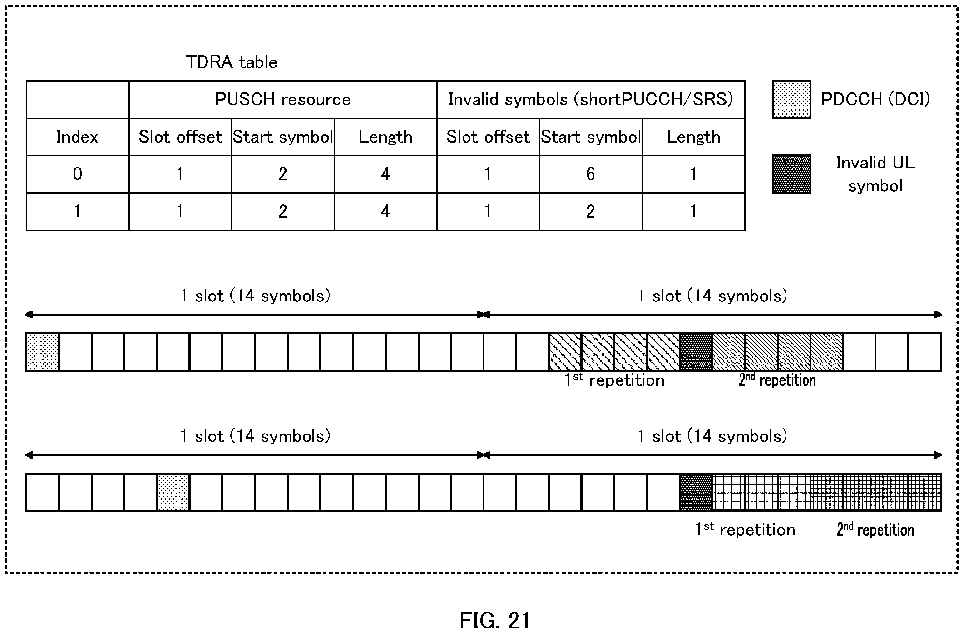

FIG. 21 illustrates an example of time resource allocation, assuming a case where terminal 200 identifies an invalid UL symbol position in accordance with a reference based on a symbol position, at which a PDCCH has been received, in a slot.

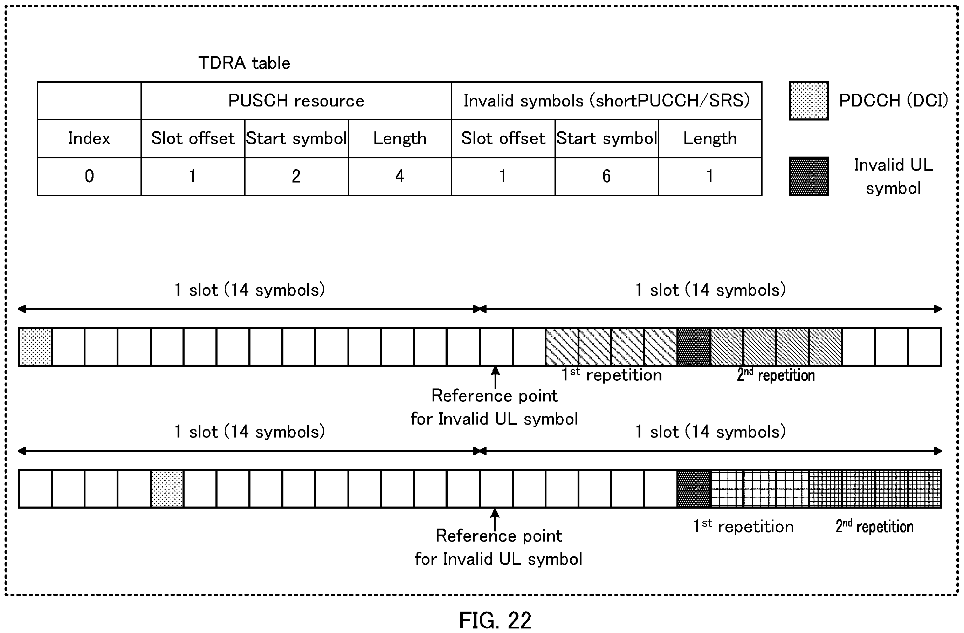

On the other hand, FIG. 22 illustrates an example of time resource allocation according to the present embodiment. In other words, FIG. 22 illustrates an example of time resource allocation in a case where an invalid UL symbol position is identified by using a first symbol of a slot as a reference.

For example, with respect to a PUSCH resource in both FIGS. 21 and 22, a reference for a position at which a PUSCH is mapped is determined based on a symbol position, at which a PDCCH has been received, in a slot. For example, when terminal 200 identifies a PUSCH time resource based on DCI, terminal 200 determines, as a reference for a symbol position at which a PUSCH is mapped, a symbol position in a slot (for example, the following slot corresponding to Slot offset = 1) to which the PUSCH is assigned, where the symbol position corresponds to a symbol position (for example, the zeroth symbol or the fourth symbol), at which the DCI has been received, in a certain slot.

Further, FIGS. 21 and 22 illustrate examples in which PUSCH transmission in an invalid UL symbol (for example, Invalid UL symbol) is dropped.

For example, in a case where a reference for an invalid UL symbol position is a reference based a symbol position at which a PDCCH has been received as illustrated in FIG. 21, the invalid UL symbol position to be identified varies depending on the PDCCH reception timing (the zeroth symbol and the fourth symbol in FIG. 21) when start symbols included in allocation patterns are the same, for example. Accordingly, as illustrated in FIG. 21, an allocation pattern for indicating one invalid UL symbol position (for example, the sixth symbol in FIG 21) can be configured for each PDCCH reception timing. In other words, in FIG. 21, a plurality of allocation patterns is configured for the same invalid UL symbol position so that overhead of a higher-layer signalling for allocation pattern configuration may increase.

In FIG. 22, on the other hand, in a case where an invalid UL symbol position is identified, terminal 200 determines, as a reference for a position at which the invalid UL symbol is mapped, a start symbol position in a slot to which a PUSCH is assigned. For example, as illustrated in FIG. 22, even in a case where PDCCH reception timings (the zeroth symbol and the fourth symbol in FIG. 22) differ, terminal 200 can identify an invalid UL symbol position (for example, the sixth symbol) by one allocation pattern (for example, Index = 0 in FIG. 22). In other words, in FIG. 22, one allocation pattern is configured for indicating one invalid UL symbol position regardless of the PDCCH reception timing.

Thus, in the present embodiment, with respect to a PDCCH (for example, DCI) indicated by base station 100, terminal 200 identifies a PUSCH resource in accordance with a reference based on a position at which the PDCCH is received, in the case of being based on information on a position at which a PUSCH is mapped (for example, a first condition), and terminal 200 identifies an invalid UL symbol position in accordance with a reference based on a first symbol position in a slot, in the case of being based on invalid UL symbol position-related information (for example, a second condition).

According to the present embodiment, base station 100 can indicate terminal 200 of an invalid UL symbol position regardless of the PDCCH reception timing with this processing so that it is possible to reduce patterns for invalid UL symbol position indication.

### (Embodiment 3)

In URLLC of Release 16, for example, the enhanced PUSCH transmission that allows repeated transmission per mini slot or resource allocation between slots to be flexibly configured has been discussed. With respect to downlink, on the other hand, the application of the operation of Release 15 has been discussed.

Accordingly, a method of flexibly configuring repeated transmission per mini slot or resource allocation between slots may not be applied to downlink.

Accordingly, in the present embodiment, a method of allocating a time resource in accordance with each of downlink and uplink will be described.

The configurations of the base station and the terminal according to the present embodiment may be the same as the configurations of base station 100 and terminal 200 according to Embodiment 1.

For example, terminal 200 controls, in control of mapping a PUSCH or a PDSCH with respect to a time resource based on DCI, a reference for a position at which the PUSCH or the PDSCH is mapped in the time resource, based on whether data to be assigned is the PUSCH or the PDSCH. In other words, terminal 200 switches between references for a position at which the PUSCH or the PDSCH is mapped in the time resource, based on whether data is the PUSCH or the PDSCH.

For example, in a case where a time resource of a PDSCH is allocated, terminal 200 identifies a top symbol position, at which reception of the PDSCH is started, in a slot in accordance with a reference based on a symbol position, at which a PDCCH including DCI has been received, in the slot.

For example, in a case where a time resource of a PUSCH is allocated, on the other hand, terminal 200 identifies a start symbol position, at which transmission of the PUSCH is started, in a slot in accordance with a reference based on a first symbol of the slot.

In other words, in the present embodiment, Condition A in FIG. 17 is that a time resource of a PDSCH is allocated (for example, in the case of downlink), and Condition B is that a time resource of a PUSCH is allocated (for example, in the case of uplink).

Note that, base station 100 may indicate a different allocation pattern depending on whether a time resource of a PDSCH or a time resource of a PUSCH is allocated.

According to the present embodiment, in the case of PUSCH transmission, a time resource is determined by using a first symbol of a slot as a reference so that terminal 200 may not determine whether a start symbol position of data to be identified is identical to a slot indicated by a slot offset of a time resource pattern, for example. Thus, even in a case where repetition to be applied to PUSCH is configured over a plurality of slots, terminal 200 can easily identify a time resource that can be used for PUSCH transmission.

Further, for example, base station 100 indicates terminal 200 of a symbol configured as a DL symbol (or a flexible symbol) in a slot by SFI which is information per slot, for example. Thus, in the case of PUSCH transmission to which repetition can be applied, terminal 200 can determine whether each symbol included in a PUSCH resource can be used by comparing DL symbol (or flexible symbol) configuration per slot with PUSCH resource configuration per slot. With this determination, terminal 200 can easily identify a time resource that can be used for PUSCH transmission even in a case where a time resource pattern of a PUSCH assigned by DCI includes a symbol configured as a DL symbol (or a flexible symbol) (not illustrated), for example.

Accordingly, according to the present embodiment, it is possible to restrain time resource identification-related processing in terminal 200 from becoming complicated.

Further, when PUSCH to which repetition can be applied is transmitted, a time resource is determined by using a first symbol of a slot as a reference so that the range for configuring a start symbol position of data is, for example, 0 to 13, and it is possible to restrain an increase in higher-layer signalling overhead as in the example illustrated in FIG. 13, for example.

Further, according to the present embodiment, in the case of PDSCH transmission to which repetition cannot be applied, terminal 200 determines a time resource of a PDSCH in accordance with a reference based on a symbol position at which a PDCCH is received. With this allocation, for example, allocation of the same symbol length can be configured by one allocation pattern. Thus, according to the present embodiment, for example, it is possible to reduce the number of bits in the TDRA field in DCI. Alternatively, according to the present embodiment, for example, in a case where the number of bits in the TDRA field is fixed, it is possible to configure an allocation pattern of another time resource so that the flexibility of time resource allocation can be improved.

The embodiments according to an exemplary embodiment of the present disclosure have been described thus far.

### (Other Embodiments)

Note that, in the embodiments described above, a description has been given of a method in which, in a case where a time resource is controlled by DCI, the complexity of time resource identification-related processing in terminal 200 is reduced by switching whether a position, at which transmission or reception of data is started, in a slot is identified by using the beginning of a slot as a reference or by using a symbol position, at which a PDCCH is received, as a reference, based on a condition. However, the condition for switching between the references for a position at which data is mapped is not limited to the conditions described in the embodiments described above, but may be other conditions.

For example, for PDSCH time resource allocation, a difference in methods (in other words, HARQ codebooks) of transmitting a response signal (also referred to as ACK/NACK or HARQ-ACK, for example) may be configured as a condition. For example, in Type-1 (quasi-static) codebook, the beginning of a slot may be used as a reference, and in Type-2 (dynamic) codebook, a symbol position at which a PDCCH is received may be used as a reference.

Further, for example, for PDSCH time resource allocation, a difference in scheduling methods may be configured as a condition. For example, in Semi-Persistent Scheduling (SPS), the beginning of a slot may be used as a reference, and in Dynamic scheduling, a symbol position at which a PDCCH is received may be used as a reference.

Further, the condition for switching between the references for a position at which data is mapped is not limited thereto, but may be other conditions.

Further, in an exemplary embodiment of the present disclosure, in a case where terminal 200 receives a PDCCH in the n^{th} symbol in a slot, a symbol position, at which PUSCH transmission or PDSCH reception is started, in the slot may be indicated as n+S, where S corresponds to a value (for example, a start symbol) to be indicated in the TDRA field in DCI described above. For example, in a case where the beginning of a slot is used as a reference, n = 0 regardless of the PDCCH reception timing.

Further, in the embodiments described above, the method of allocating a time resource with respect to data (for example, downlink data or uplink data) has been described, but the object with respect to which a time resource is allocated is not limited to data. For example, an exemplary embodiment of the present disclosure may be applied to allocation of a time resource with respect to a reference signal (for example, a Demodulation Reference Signal (DMRS), Channel State Information RS (CSI-RS), and a SRS).

Further, in the embodiments described above, the case where the symbol in which the terminal receives a PDCCH including DCI is 1 symbol has been described, but the present disclosure is not limited thereto. The symbol in which the terminal receives a PDCCH including DCI may be a plurality of symbols. In a case where the symbol in which the terminal receives a PDCCH including DCI is a plurality of symbols, terminal 200 may determine a reference for mapping data based on a position of one symbol (for example, a first (or start) symbol) of the plurality of symbols.

Further, in the embodiments described above, the uplink communication in which a signal is transmitted from the terminal to the base station or the downlink communication in which a signal is transmitted from the base station to the terminal has been assumed. However, an exemplary embodiment of the present disclosure is not limited thereto, but may be applied to communication between terminals (for example, sidelink communication).

Further, the downlink control channel, the downlink data channel, the uplink control channel, and the uplink data channel are not limited to PDCCH, PDSCH, PUCCH, and PUSCH, respectively, but may be control channels with other names.

Further, the time resource unit is not limited to the time resource (for example, the slot or the sub slot) described in the embodiments described above, but may be any other time resource unit (for example, the subframe, the frame, or the like).

In the embodiments described above, the case where the number of configuration symbols in a slot (in other words, a unit time interval) is 14 symbols has been described, but the number of configuration symbols in a slot is not limited to 14 symbols, but may be any other number of symbols (for example, 12 symbols). Further, the mapping positions of the signals (for example, PDCCH, PDSCH or PUSCH) or the invalid symbols (or the invalid UL symbols) indicated in the embodiments described above are exemplary, and the signals and the invalid symbols may be mapped at other positions.

Further, at least two of Embodiment 1 (for example, Operation Examples 1-1, 1-2, and 1-3, and the variation), Embodiment 2, and Embodiment 3 described in an exemplary embodiment of the present disclosure may be combined with each other.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a field programmable gate array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include a radio frequency (RF) module including amplifiers, RF modulators/demodulators and the like, and one or more antennas. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to an exemplary embodiment of the present disclosure includes: reception circuitry, which, in operation, receives control information in downlink; and control circuitry, which, in operation, controls, in control of mapping data with respect to a time resource based on the control information, a reference for a position at which the data is mapped in the time resource, based on a certain condition.

In an exemplary embodiment of the present disclosure, in a case where a first condition is satisfied, the control circuitry determines, as the reference, a symbol position corresponding to a position of a symbol in a first unit interval of the time resource, where the symbol position is in a second unit interval and the position of the symbol is a position at which the control information has been received, and in a case where a second condition is satisfied, the control circuitry determines, as the reference, a top symbol position in the second unit interval.

In an exemplary embodiment of the present disclosure, the first condition is that repetition is not applied to the data, and the second condition is that the repetition is applied to the data.

In an exemplary embodiment of the present disclosure, the first condition is that the data to be subjected to repetition is assigned to the second unit interval which is one unit interval, and the second condition is that the data to be subjected to the repetition is assigned over the second unit interval and a third unit interval following the second unit interval.

In an exemplary embodiment of the present disclosure, the first condition is that the data is downlink data, and the second condition is that the data is uplink data.

In an exemplary embodiment of the present disclosure, the certain condition is that the control information has been received in a certain symbol in a first unit interval in the time resource, and in a case where the certain condition is satisfied, the control circuitry determines a symbol position in a second unit interval in the time resource, as the reference with respect to the data to be subjected to repetition in a second unit interval. The symbol position corresponds to a position of the certain symbol in the first unit interval, and the position of the certain symbol is a position at which the control information has been received.

In an exemplary embodiment of the present disclosure, the certain condition is that the control information has been received in a certain symbol in a first unit interval in the time resource, and in a case where the certain condition is satisfied, the control circuitry determines a symbol position in a second unit interval in the time resource, as the reference with respect to the data to be subjected to repetition over the second unit interval and a third unit interval following the second unit interval. The symbol position corresponds to a position of the certain symbol in the first unit interval, and the position of the certain symbol is a position at which the control information has been received.

In an exemplary embodiment of the present disclosure, in a case where a symbol to which the data is assigned in the time resource is included in a duration corresponding to a processing time of the data, the control circuitry determines non-transmission of the data or transmission postponement of the data.

In an exemplary embodiment of the present disclosure, the control information includes first information and second information, where the first information is information on a first position at which the data is mapped in the time resource, and the second information is information on a second position at which transmission of the data is not allowed, the certain condition includes a first condition based on the first information and a second condition based on the second information, and in a case where the first condition is satisfied, the control circuitry determines, as the reference for the first position, a symbol position corresponding to a position of a symbol in a first unit interval in the time resource, where the symbol position is in a second unit interval in the time resource and the position of the symbol is a position at which the control information has been received, and in a case where the second condition is satisfied, the control circuitry determines, as the reference for the second position, a top symbol position in the second unit interval.

A communication method according to an exemplary embodiment of the present disclosure includes: receiving, by a terminal, control information in downlink; and controlling, by the terminal, in control of mapping data with respect to a time resource based on the control information, a reference for a position at which the data is mapped in the time resource, based on a certain condition.

The disclosure of Japanese Patent Application No. 2019-187624, filed on October 11, 2019, including the specification, drawings and abstract, is incorporated herein by reference in its entirety.

### Industrial Applicability

An exemplary embodiment of the present disclosure is useful for a radio communication system.

### Reference Signs List

100 Base station
101, 205 Controller
102 Higher-layer control signal generator
103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

## Claims

1. A terminal, comprising:
reception circuitry, which, in operation, receives control information in downlink; and
control circuitry, which, in operation, controls, in control of mapping data with respect to a time resource based on the control information, a reference for a position at which the data is mapped in the time resource, based on a certain condition.

2. The terminal according to claim 1, wherein in a case where a first condition is satisfied, the control circuitry determines, as the reference, a symbol position corresponding to a position of a symbol in a first unit interval of the time resource, the symbol position being in a second unit interval, the position of the symbol being a position at which the control information has been received, and wherein in a case where a second condition is satisfied, the control circuitry determines, as the reference, a first symbol position in the second unit interval.

3. The terminal according to claim 2, wherein the first condition is that repetition is not applied to the data, and the second condition is that the repetition is applied to the data.

4. The terminal according to claim 2, wherein the first condition is that the data to be subjected to repetition is assigned to the second unit interval which is one unit interval, and the second condition is that the data to be subjected to the repetition is assigned over the second unit interval and a third unit interval following the second unit interval.

5. The terminal according to claim 2, wherein the first condition is that the data is downlink data, and the second condition is that the data is uplink data.

6. The terminal according to claim 1, wherein:
the certain condition is that the control information has been received in a certain symbol in a first unit interval in the time resource, and
in a case where the certain condition is satisfied, the control circuitry determines a symbol position in a second unit interval in the time resource, as the reference with respect to the data to be subjected to repetition in the second unit interval, the symbol position corresponding to a position of the certain symbol in the first unit interval, the position of the certain symbol being a position at which the control information has been received.

7. The terminal according to claim 1, wherein:
the certain condition is that the control information has been received in a certain symbol in a first unit interval in the time resource, and
in a case where the certain condition is satisfied, the control circuitry determines a symbol position in a second unit interval in the time resource, as the reference with respect to the data to be subjected to repetition over the second unit interval and a third unit interval following the second unit interval, the symbol position corresponding to a position of the certain symbol in the first unit interval, the position of the certain symbol being a position at which the control information has been received.

8. The terminal according to claim 1, wherein in a case where a symbol to which the data is assigned in the time resource is included in a duration corresponding to a processing time of the data, the control circuitry determines non-transmission of the data or transmission postponement of the data.

9. The terminal according to claim 1, wherein:
the control information includes first information and second information, the first information being information on a first position at which the data is mapped in the time resource, the second information being information on a second position at which transmission of the data is not allowed,
the certain condition includes a first condition based on the first information and a second condition based on the second information, and
in a case where the first condition is satisfied, the control circuitry determines, as the reference for the first position, a symbol position corresponding to a position of a symbol in a first unit interval in the time resource, the symbol position being in a second unit interval in the time resource, the position of the symbol being a position at which the control information has been received, and wherein in a case where the second condition is satisfied, the control circuitry determines, as the reference for the second position, a first symbol position in the second unit interval.

10. A communication method, comprising:
receiving, by a terminal, control information in downlink; and
controlling, by the terminal, in control of mapping data with respect to a time resource based on the control information, a reference for a position at which the data is mapped in the time resource, based on a certain condition.
